# EUROPEAN PATENT SPECIFICATION

(11) **EP 1 530 339 B1**
(45) Date of publication and mention of the grant of the patent: **05.03.2008**
(21) Application number: 03025679.6
(22) Date of filing: 07.11.2003
(51) Int. Cl.: H04L 29/06, H04L 12/56, H04L 12/28

(54) **Method and apparatuses for access control to encrypted data services for a vehicle entertainment and information processing device**
Verfahren und Vorrichtungen für die Zugangskontrolle zu verschlüsselten Datendiensten für ein Unterhaltungs- und Informationsverarbeitungsgerät in einem Fahrzeug
Méthode et dispositifs de contrôle d'accès aux services de données chiffrées pour un appareil de véhicule de divertissement et de traitement des informations

(43) Date of publication of application: 11.05.2005
(73) Proprietor: Harman Becker Automotive Systems GmbH, 76307 Karlsbad (DE)
(72) Inventor: Vuz, Volker, 38106 Braunschweig (DE); Behrens, Ralph, 31174 Schellerten (DE); Behrens, Grit, 31174 Schellerten (DE)
(74) Representative: Grünecker, Kinkeldey, Stockmair & Schwanhäusser Anwaltssozietät

(56) References cited:
- EP-A- 1 209 928
- WO-A-00/48375
- US-A1- 2002 059 614
- SUN MICROSYSTEMS: "Netscape Certificate Management System Installation and Deployment Guide: Introduction to Certificate" INTERNET CITATION, [Online] 2000, pages 1-35, XP002271674 Retrieved from the Internet: <URL:http://docs.sun.com/source/816-5533-1 0/intro.htm> [retrieved on 2004-02-26]
- 3GPP SA: "3rd Generation Partnership Project; Technical Specification Group and System Aspects, Multimedia Broadcast/Multicast Service (MBMS), Architecture and functional description (Release 6), Chapters 1-6" JOURNAL ARTICLE, [Online] December 2002 (2002-12), pages 1-31, XP002271675 Retrieved from the Internet: <URL:www.3gpp.org> [retrieved on 2004-02-26]
- DAIMLERCHRYSLER, SUN MICROSYSTEMS: "DaimlerChrysler IT Cruiser Telematics Concept" INTERNET CITATION, [Online] January 2001 (2001-01), pages 1-11, XP002271676 Retrieved from the Internet: <URL:http://java.sun.com/products/consumer -embedded/automotive/whitepapers/ITCruiser -Whitepaper.pdf> [retrieved on 2004-02-26]

## Description

### Field of the Invention

The present invention relates to an access control method for controlling access to data services in a networked system comprising a content server providing a data service using data in encrypted form, a vehicle entertainment and information processing device (VEIPD) and an access control server. Further, this invention relates to a VEIPD, an access control server and a networked system comprising the vehicle entertainment and information processing device, a content server and the access control server.

### Related Art

The Internet is an open system, where the identity of the communicating partners is not easy to define. Further, the communication path is non-physical and may include any number of eavesdropping and active interference possibilities. Thus, internet communication is much like anonymous postcards, which are answered by anonymous recipients. However, these postcards, open for anyone to read - and even write in them - must carry messages between specific endpoints in a secure and private way.

The solution is to use encryption (to assure privacy and security) and certification (to assure that communication is happening between the desired endpoints). The problems that may be caused by false certification or no certification mechanisms can range from a "man-in-the-middle" attack in order to gain knowledge over controlled data, to a completely open situation to gain access to data and resources. It is important to note that these problems do not disappear with encryption or even a secure protocol. If the user is led to connect to a spoofing site, which appears to be what he wants, he may have a secure connection to a thief and that will not make it safer. Thus, identity certification, or authentication, is a must.

The ITU-T Recommendation X.509 (which has been implemented as a de facto standard) defines a framework for the provision of authentication services, under a central control paradigm represented by a "Directory". It describes two levels of authentication: simple authentication, using a password as a verification of claimed identity; and strong authentication, involving credentials formed by using cryptographic techniques.

A certificate also known as a user certificate or public key certificate comprises the public keys of a user, together with some other information, rendered unforgeable by encipherment with the private key of the certification authority which issued it. The certificate allows an association between a name called "unique distinguished name" (DN) for the user and the user's public-key: The DN is denoted by a NA (Naming Authority) and accepted by a CA (Certification Authority) as unique within the CA's domain, where the CA can double as a NA. It is interesting to note that the same user can have different DNs in different CAs, or can use the same DN in different CAs even if it is not the first one to use it in a CA - so different DNs for different CAs do not necessarily mean different users and vice-versa. Further, a DN does not have to contain the user's real-world name or location. Thus, semantically, the CA certificate refers to a name; however it does not denote it.

X.509 focuses on defining a mechanism by which information can be made available in a secure way to a third-party. However, X.509 does not intend to address the level of effort which is needed to validate the information in a certificate neither define a global meaning to that information outside the CA's management acts. The main purpose of a CA is to bind a public key to the name contained in the certificate and thus assure third parties that some measure of care was taken to ensure that this binding is valid for both - i.e., name and key. However, the issue whether a user's DN actually corresponds to identity credentials that are linked to a person or simply to an e-mail address - and how such association was verified - is outside the scope of X.509 and depends on each CA's self-defined rules, called CPS.

HTTPS and SSL are protocols supporting the use of X.509 digital certificates from the server so that, if necessary, a user can authenticate the sender.

The Secure Sockets Layer (SSL) is a commonly-used protocol for managing the security of a message transmission on the Internet (see Freier et al, "The SSL protocol version 3.0", Internet Draft, available at http://www.ietf.org, November 18, 1996). As briefly mentioned above, SSL provides a framework of mechanism defining an authentication procedure of users (communication endpoints) and provides procedures for setting up an encrypted communication between the users of the protocol. SSL has recently been succeeded by Transport Layer Security (TLS), which is based on SSL. SSL uses a program layer located between the Internet's Hypertext Transfer Protocol (HTTP) and Transport Control Protocol (TCP) layers. SSL is included as part of both the Microsoft and Netscape browsers and most Web server products. Developed by Netscape, SSL also gained the support of Microsoft and other Internet client/server developers as well and became the de facto standard until evolving into Transport Layer Security. The "sockets" part of the term refers to the sockets method of passing data back and forth between a client and a server program in a network or between program layers in the same computer. SSL uses the public-and-private key encryption system from RSA, which also includes the use of a digital certificate.

TLS and SSL are an integral part of most Web browsers (clients) and Web servers. If a Web site is on a server that supports SSL, SSL can be enabled and specific Web pages can be identified as requiring SSL access. Any Web server can be enabled by using Netscape's SSLRef program library which can be downloaded for noncommercial use or licensed for commercial use

HTTPS (Hypertext Transfer Protocol over Secure Socket Layer, or HTTP over SSL) is a Web protocol developed by Netscape and built into its browser that encrypts and decrypts user page requests as well as the pages that are returned by the Web server. HTTPS is really just the use of Netscape's Secure Socket Layer (SSL) as a sublayer under its regular HTTP application layering. (HTTPS uses port 443 instead of HTTP port 80 in its interactions with the lower layer, TCP/IP.) SSL uses a 40-bit key size for the RC4 stream encryption algorithm, which is considered an adequate degree of encryption for commercial exchange.

Due to integrating devices capable of providing not only in-vehicle entertainment and navigation functionalities to the user, modem "radio receivers" and increasing available bandwidth on the radio link also facilitate the provision of new data services and/or online access to the Internet. In the course of enabling modem in-vehicle broadcast receivers of providing internet access, security has become an issue. So far, protocols as WAP enable the users of mobile devices (or devices having integrated radio modules) in vehicles to gain access to internet content in a rather functionally reduced manner compared to the browsers on desktop computers using HTTP, Macromedia Flash, Java, JScript, etc. for animating web pages' content and enabling enhanced navigation on web pages. As more sophisticated access methods and broadband access via wireless links slowly become standard, the users demand more sophisticated products and applications to gain access to data or broadcast services e.g. over the Internet, in a manner similar as they are used to from their desktop computer with broadband access at home or at work.

Securing communications and services by employing X.509 and SSL, i.e. enabling their usage in modem vehicle entertainment and information processing devices is therefore desirable. However, also access control to particular data services or broadcast services provided to the users of the vehicle entertainment and information processing devices may be desirable. Since mobile terminal having radio access to networks may change their location and access points to the networks frequently, it is of interest to provide access control for those mobile devices independent of their actual access point to a network.

US 2002/0059614 A1 relates to a system and method for distributing digital content on-demand on a common carrier environment, such as an airplane. A mobile multimedia terminal with a WLAN or Bluetooth link to a content server aboard the plane is used by a passenger to request digital content, such as movies, music, games, etc. In response, the server transmits the requested content to passengers device via a DVB-T connection.

### Summary of the Invention

Hence, there is a need to enable access control for encrypted data services used by a vehicle entertainment and information processing device.

This invention provides an access control method for controlling access to data services in a networked system comprising a content server providing a data service using data in encrypted form, a vehicle entertainment and information processing device and an access control server. According to a first embodiment of this invention the vehicle entertainment and information processing device may request access to the data service at the access control server. Upon receiving this request, the access control server may determine, whether the vehicle entertainment and information processing device is allowed to access the requested data service.

If the access control server determines that the vehicle entertainment and information processing device is allowed to access the requested data service, the access control server may provide access information related to the content server to the vehicle entertainment and information processing device, wherein the vehicle entertainment and information processing device may use the access information to set up an encrypted connection to the content server or to decrypt encrypted data of the data service provided by the content server.

According to this embodiment, a vehicle entertainment and information processing device may only use secure communication when using a data service (e.g. data delivery according to the SSL de facto standard or HTTPS protocol), if it has the access information i.e. certificate enabling the vehicle entertainment and information processing device to set-up a session/connection for exchanging encrypted service data between the content server and the vehicle entertainment and information processing device. Further, when trying to receive an encoded data service, e.g. an audio or video broadcast service, from the respective content server, the vehicle entertainment and information processing device is only capable of receiving (and decoding) the information broadcasted provided with the correct session key. Hence, the access to data services may be controlled by an access control server by only providing the vehicle entertainment and information processing device with the necessary access information for successfully receiving the requested data service, if the vehicle entertainment and information processing device is granted access to the service by the access control server. This access control mechanism is also independent from the point of access of the vehicle entertainment and information processing device to the network.

In a further embodiment of this invention the access control method may further comprise the step of the vehicle entertainment and information processing device receiving (and decrypting) the encrypted data service from the content server using the access information received from the access control server.

According to another embodiment, the vehicle entertainment and information processing device may set up an encrypted connection to the content server using the access information received from the access control server, and may exchange encrypted connection data related to the data service between the vehicle entertainment and information processing device and the content server. The connection may also be called a session, e.g. when considering HTPPS.

Further, according to another embodiment of this invention, the vehicle entertainment and information processing device may determine whether the access information is stored in the vehicle entertainment and information processing device. If the access information is stored in the vehicle entertainment and information processing device, the vehicle entertainment and information processing device may set up an encrypted connection to the content server using the stored access information or decrypt encrypted data of the data service provided by the content server using the stored access information.

This has the advantage that the vehicle entertainment and information processing device only may only have to request access to a service once. Taking an HTTPS session as an example, as long as the access information (e.g. the certificate) received from the access control server is valid for a session set-up to the content server, no extra signaling between the access control server and the vehicle entertainment and information processing device may be needed. As the information may be only valid for a certain amount of time, the access control server may still control access to services, as after "expiry" of the validity period of the provided access information the vehicle entertainment and information processing device may have to request access to the data service again.

In a further embodiment of this invention, the information related to the content server is a certificate, e.g. an X.509 digital certificate.

Upon being requested access to a particular data service by a vehicle entertainment and information processing device, the access control server may determine whether the certificate corresponding to the content server is stored at the access control server, and if the certificate is not stored at the access control server, the access control server may request the certificate from the content server or a certificate authority. This may significantly reduce the signaling between the vehicle entertainment and information processing device and the access control server, which is especially of relevance if the vehicle entertainment and information processing device is connected to the networked system via a radio link having scarce resources.

To provide a faster response on a service access request from the vehicle entertainment and information processing device, the access control server may receive and store the access information received from the content server or the certificate authority.

In another embodiment of this invention, the access control server's provision of access information to the vehicle entertainment and information processing device (100) may comprises transmitting a message from the access control server to the vehicle entertainment and information processing device indicating a location at the access control server from which the access information may be obtained by the vehicle entertainment and information processing device. In particular the message mentioned above may be a SMS or MMS message that indicates a location at the access control server in form of an URL.

Further, the vehicle entertainment and information processing device may request the access information from the access control server at the location indicated upon receiving the message. In turn, the access control server may transmit the access information to the vehicle entertainment and information processing device.

In order to save resources and to reduce costs when assuming that a radio link connection between the vehicle entertainment and information processing device and the access network is charged on a time basis, an established communication channel to the radio access network may be ended upon having requested access to a data service. In order to allow the vehicle entertainment and information processing device to obtain the access information form the access control server, a timer may be started upon having requested access to the data service at the access control server. Upon expiry of the timer, the vehicle entertainment and information processing device may then request the access information from the access control server, and the access control server may provide the access control information to the vehicle entertainment and information processing device

Hence, the timer may be used to trigger a (re)establishment of a radio channel between the vehicle entertainment and information processing device and the radio access network to allow the vehicle entertainment and information processing device to obtain the access information. Upon having received the access information, the established radio channel may be tom down again.

According to another embodiment of this invention, the access request of the vehicle entertainment and information processing device to the access control server indicates the data service to which access is requested and/or an identifier of the requesting vehicle entertainment and information processing device.

In a further embodiment of this invention, the vehicle entertainment and information processing device accesses the network via a radio link.

In another embodiment of this invention the data service is an encrypted broadcast service.

The access information relating to the content server may be a session key enabling the vehicle entertainment and information processing device to decrypt the encrypted data service, i.e. broadcast service

According to another embodiment of this invention, the data service may be provided to a user of the vehicle entertainment and information processing device employing a browser application.

The vehicle entertainment and information processing device may store the access information at the vehicle entertainment and information processing device, e.g. for later reuse.

Some browser applications require that all certificates or session keys used for setting up secure connections are available when starting the browser application. According to another embodiment of this invention, the browser application may be restarted upon storing the access information at the vehicle entertainment and information processing device, in order to be capable of using a newly received certificate or session key.

The vehicle entertainment and information processing device may further retrigger the request for the data service.

According to a further embodiment of this invention, the access control server may determine whether the vehicle entertainment and information processing device is allowed to access the requested data service based on an identifier uniquely identifying the vehicle entertainment and information processing device.

In another embodiment of this invention, the access control server may initiate a subscription process for allowing the vehicle entertainment and information processing device to subscribe to the requested data service, if the access control server determines that the vehicle entertainment and information processing device is not allowed to access the requested data service.

Moreover, this invention provides a vehicle entertainment and information processing device in a system comprising a content server, the vehicle entertainment and information processing device and an access control server connected to each other via a network. The vehicle entertainment and information processing device is adapted to perform the access control method as described above.

Further, this invention provides an access control server in a system comprising a content server, a vehicle entertainment and information processing device and the access control server connected to each other via a network. The access control server is adapted to perform the access control method described above.

Finally, this invention provides a system comprising a content server, the inventive vehicle entertainment and information processing device and the inventive access control server, wherein the vehicle entertainment and information processing device, the access control server and the content server are connected to each other via a network.

### Brief Description of the Figures

In the following, this invention will be described in more detail referring to the attached figures. Similar or corresponding details in the figures are marked with the same reference numerals.
- **Fig. 1**: shows an architecture of the system comprising the network entities: a vehicle entertainment and information processing device, an access control server, a content server and a certificate authority according to an embodiment of this invention,
- **Fig. 2**: shows an architecture of the system comprising the network entities: a vehicle entertainment and information processing device, an access control server, and a DVB or DAB provider according to an embodiment of this invention,
- **Figs 3**: shows a flow chart of an access control mechanism by a vehicle entertainment and information processing device and an access control server in a system according to Fig. 1,
- **Fig. 4**: shows a flow chart of an access control mechanism for performed by a vehicle entertainment and information processing device and an access control server in a system according to Fig. 2,
- **Fig. 5 to Fig. 7**: show message flows between the different network entities shown in Fig. 1 according to different embodiments of the present invention,
- **Fig. 8**: shows messages flows between the different network entities shown in Fig. 1 according to an alternative access control method according to an embodiment of this invention, and
- **Fig. 9 to Fig. 11**: show different message flows between different network entities shown in Fig. 2 in an access control method according to different embodiments of the present invention.

### Detailed Description of the Invention

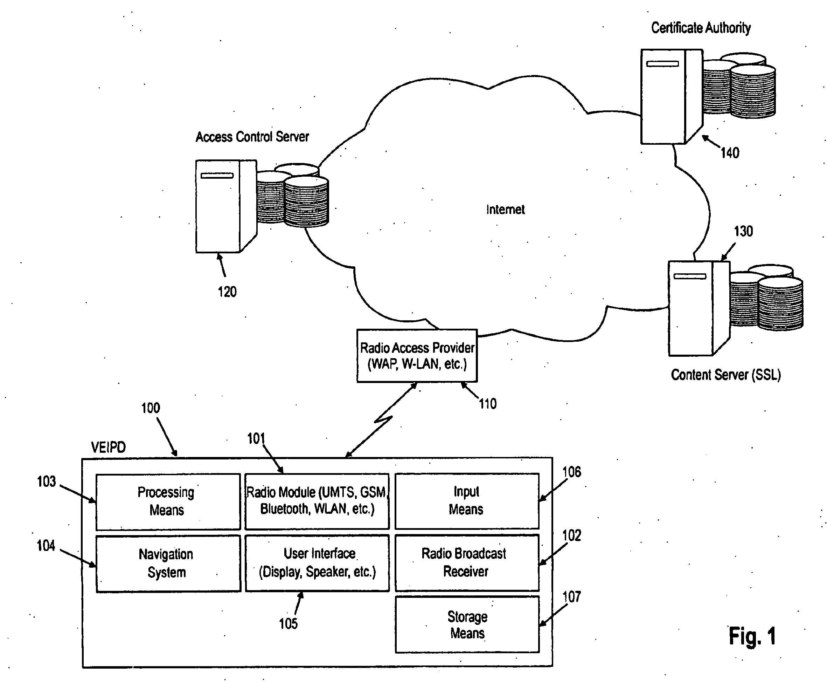

Fig. 1 shows an architecture of the system according to an embodiment of this invention comprising the following network entities: a vehicle entertainment and information processing device 100, an access control server 120, a content server 130 and a certificate authority 140.

The vehicle entertainment and information processing device 100 may be equipped with a radio module 101. The radio module 101 may be capable of receiving and transmitting data according to various Wireless standards, like UMTS, GSM, Bluetooth, W-LAN, etc. Hence, the radio module 101 may be for example used as a in-vehicle telephone or as a device providing uplink (VEIPD to radio access network) and downlink (radio access network to VEIPD) access to other networks via a radio access network of an radio access provider 110. Further, radio broadcast receiver 102 may be used to receive e.g. AM, FM or DAB radio broadcast and/or digitally encoded data sent along with radio broadcast, such as RDS signals.

In order to control the different means of the vehicle entertainment and information processing device 100, to manage and process e.g. (device-internal) data or RDS information, to process and to respond to user input, etc. the vehicle entertainment and information processing device 100 may further comprise a processing means 103. The processing means 103 may further be adapted to exchange data with an attached navigation system 104, which may be an integrated device or an externally connected navigation system 104.

In order to interact with the with a user and to provide requested services and radio broadcast programs and information to the user, i.e. the occupants of a vehicle, the vehicle entertainment and information processing device 100 may comprise a user interface 105 which may include a display and speakers.

Further, the vehicle entertainment and information processing device 100 may enable user interaction by means enabling the user to input data, e.g. for the selection of radio broadcast programs, for selecting navigation destinations, for setting up phone calls, displaying traffic information etc. Therefore, the vehicle entertainment and information processing device 100 may include input means 106, which may be implemented by keys, a touch screen, means for voice entry, etc.

Moreover, the vehicle entertainment and information processing device 100 may also include storage means, such as ROM, RAM, memory sticks, hard drives, etc. which allow the storage of user information or device-internal parameters as well as the programs and application executed by the processing means 103.

As indicated by the arrow, the vehicle entertainment and information processing device 100 may be connected via a radio link to a radio access network of a radio access provider 110 to another wide area network, e.g. the internet. Using the radio module 101, the vehicle entertainment and information processing device 100 may e.g. establish a WAP connection to a WAP gateway of an radio access provider 110 to connect to the Internet and to receive data services from a content server 130. The content server 130 may implement SSL to securely communicate with the other communication endpoint. Hence, when setting up a connection between vehicle entertainment and information processing device 100 and a content server 130, HTTPS may be used to secure this communication. The certificates necessary for SSL may be either provided by the content server 130 itself or by a trusted certificate authority 140 also attached to the network.

As will be explained in more detail further down below, contrary to the common SSL procedure, the vehicle entertainment and information processing device 100 is prohibited from directly downloading necessary certificates from the content server 130 or the certificate authority 140. Instead, the vehicle entertainment and information processing device 100 may receive the necessary certificate(s) from the access control server 120 via the network only, i.e. by providing a certificate to the vehicle entertainment and information processing device 100 or not, the access control server 120 may control the vehicle entertainment and information processing device's 100 access to particular services.

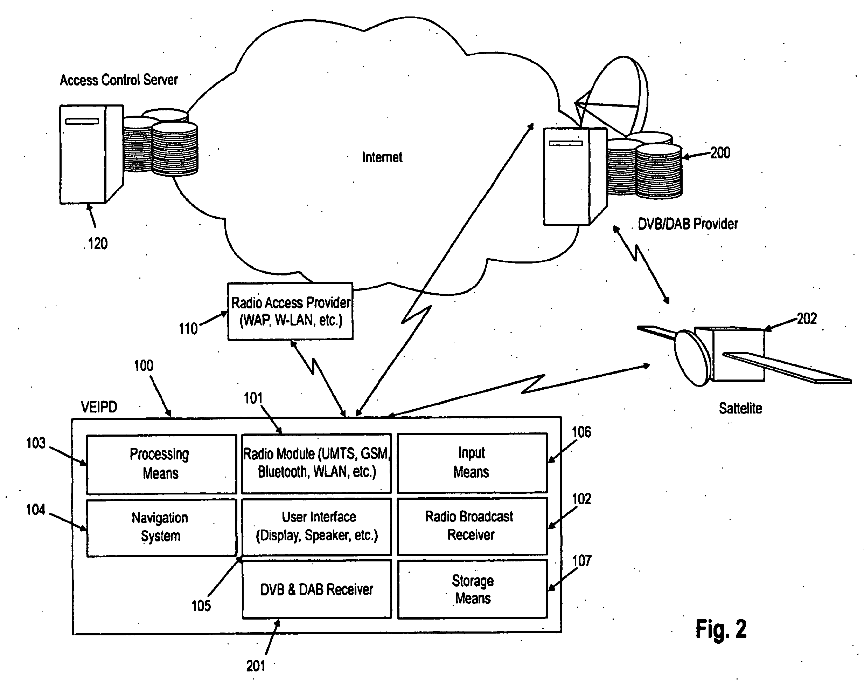

Fig. 2 shows an architecture of the system according to another embodiment of this invention comprising the following network entities: a vehicle entertainment and information processing device 100, an access control server 120, and a content server 130 in form of a DVB/DAB provider 200.

As most entities in Fig. 2 correspond to those of Fig. 1, only the differences between the two systems shown in these figures will be described in the following. Additionally to the components of the vehicle entertainment and information processing device 100 shown in Fig. 1, the vehicle entertainment and information processing device 100 according to the present embodiment may further comprise a DVB/DAB receiver 201 for receiving digital video broadcast.

It should be noted that DVB is only referred to as an example for digital video or television broadcast. This invention is not limited thereto. DVB is merely an example for an international digital broadcast standard for TV, audio and data. DVB can be broadcast via satellite (DVB-S) - indicated by the satellite 202 -, cable (DVB-C), terrestrial systems (DVB-T) or for small mobile systems (DVB-H). Also the provision of DVB/DAB programs via IP networks is under development. Generally, this invention also relates to digital audio and video broadcast (digital television) including data broadcast via DVB/DAB.

DVB provides digital video, audio and data streams. According to the different DVB standards, one or more streams may be provided by a DVB Provider 200. When broadcasting via satellite (DVB-S), cable (DVB-C) or antennas (DVB-T), there may be several broadcast channels available, i.e. multiple streams may be provided on different carrier frequencies. Each stream may be identified by a so called stream_ID.

Each stream may carry a plurality of different broadcast programs. A DVB transport stream (TS) is not divided into fixed-length frames but uses a variable length frame structure, the program elementary streams (PES). Each PES comprises a header (PES header) and a payload section (PES data). The data may be included in the payload section, while the header identifies the program to which the following payload data belong, as well as the length of the payload data. Hence, the DVB stream may carry various multiplexed broadcast programs.

Additionally to the payload data carrying streams, some additionally "control" stream may be broadcasted, which identifies the different programs multiplexed in each DVB transport stream (TS). The control channels may be also referred to as the program association table PAT, the program map table PMT, the conditional access table CAT and the network information table NIT.

The PAT indicates the location of the corresponding PMT. It also gives the location of the NIT. The PMT identifies and indicates the locations of the streams that make up each service (video, audio or data), and the type of the encryption of the services data. The CAT provides information on the conditional access (CA) systems used in the multiplex; the information is private and dependent on the CA system, but includes the location of the EMM stream, when applicable. The NIT is intended to provide information about the physical network

A comparable implementation of frame structures, streams and lookup tables may be used for DAB.

The DAB and DVB streams may also be protected from unauthorized access by scrambling. One example for an implementation of a conditional access and scrambling mechanism is described in ETR 289 (Digital Video Broadcasting (DVB); Support for use of scrambling and Conditional Access (CA) within digital broadcasting systems).

The scrambling algorithm may operate on the payload of a transport stream (TS) packet in the case of TS-level scrambling. A structuring of program elementary stream (PES) packets may be used to implement PES-level scrambling with the same scrambling algorithm.

According to the PES level scrambling method the PES packet header may not be scrambled and TS packets containing parts of a scrambled PES packet may not contain an adaptation field (with the exception of the TS packet containing the end of the PES packet). The header of a scrambled PES packet shall not span multiple TS packets. The TS packet carrying the start of a scrambled PES packet is filled by the PES header and the first part of the PES packet payload.

The first part of the PES packet payload may be scrambled exactly as a TS packet with a similar size payload. The remaining part of the PES packet payload may be split in super-blocks of 184 bytes. Each super-block may be scrambled exactly as a TS packet payload of 184 bytes. The end of the PES packet payload may be aligned with the end of the TS packet by inserting an Adaptation Field of suitable size. If the length of the PES packet is not a multiple of 184 bytes, the last part of the PES packet payload (from 1 to 183 bytes) may be scrambled exactly as a TS packet with a similar size payload.

The PES level scrambling method may put some constraints on the multiplexing process in order to make the de-scrambling process easier. This method may create some bitrate overhead if adaptation fields (AFs) are needed in TS packets carrying scrambled PES packets. In that case a TS packet containing only an adaptation field may be inserted.

For applications that scramble MPEG-2 sections, a problem occurs as the MPEG-2 specified syntax does not include any scrambling control bits. Therefore, the scrambling of sections may be at the TS level and may be signaled by the scrambling control field bits. Clear and scrambled sections should not be combined in a single TS packet. The MPEG-2 defined padding mechanism may be used to create TS packets with only clear or only scrambled sections. This means that the end of a TS packet carrying a Section may be filled with bytes having a value of OxFF, in order to separate clear and scrambled sections into different TS packets.

The algorithm described above is designed to minimize the amount of memory in the descrambler circuit at the expense of the complexity in the scrambler. The exact amount of memory and the de-scrambling delay depend on actual implementations.

In order to secure the broadcast of DVB/DAB programs, the payload data may be encrypted by a symmetrical session key that may be distributed to subscribers of the respective DVB program. Hence, when controlling the distribution of a valid session key, the reception of a DVB/DAB programs may be controlled. The distribution of the session key for the decryption of an encrypted DVB program will be discussed further down below.

As will be explained further down below in more detail, the access control server 120 in the system may distribute the session key for a DVB channel to the vehicle entertainment and information processing device 100 upon request and checking whether the vehicle entertainment and information processing device 100 is allowed to receive the requested channel. The session key may be valid for a certain time period only, such that also timely limited subscriptions, may be possible. Information of the validity period of a session key may be also communicated from the access control server 120 to the vehicle entertainment and information processing device 100 when providing the session key.

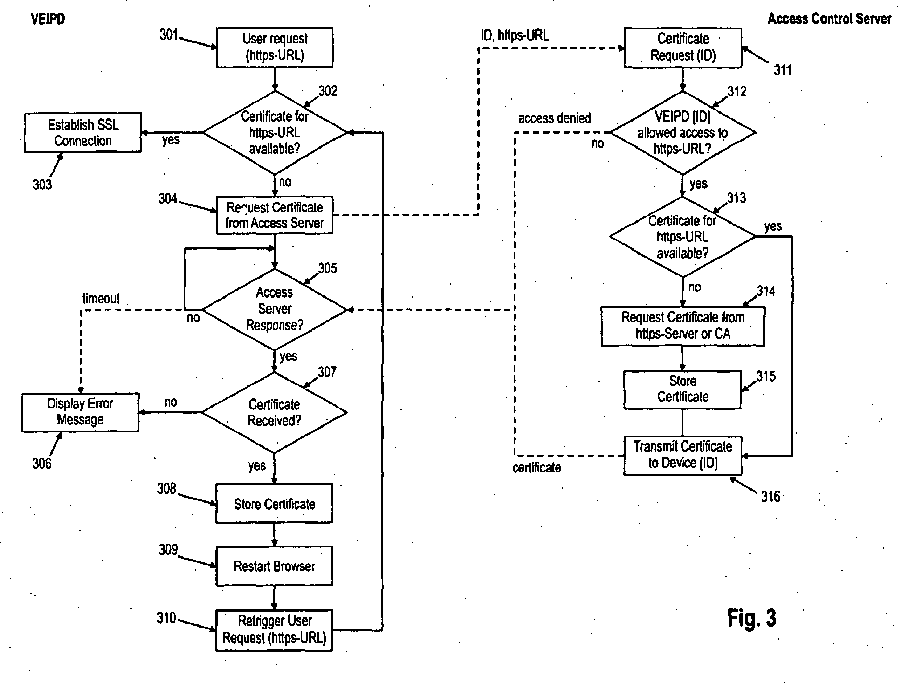

Fig. 3 shows a flow chart of an access control mechanism by a vehicle entertainment and information processing device 100 and an access control server 120 in a system according to Fig. 1. It should also be noted that the control mechanism shown is also applicable to the system shown in Fig. 2 considering a secured data delivery through the access network. E.g. in addition to HTTPS based service delivery, also DVB channels may be delivered via the internet and radio access network to the vehicle entertainment and information processing device 100.

Upon user request - or an automated vehicle entertainment and information processing device's 100 request - of a particular data service, in this embodiment the request of a URL at an HTTPS server in step 301, the vehicle entertainment and information processing device 100 checks in step 302 whether the certificate(s) needed for the establishment of a SSL communication with the designated content server 130 is available at the vehicle entertainment and information processing device 100 and whether it has not expired, i.e. is still valid. The vehicle entertainment and information processing device 100 may have stored the necessary certificate(s) in its storage means.

If the certificate is locally available, the vehicle entertainment and information processing device 100 may establish an SSL connection to the selected HTTPS content server 130 in step 303 using the standard SSL protocol methods. It has to be noted here, that the vehicle entertainment and information processing device 100 may not need to download the certificate from any server in this scenario. In more detail, the situation in which a certificate is already locally available at the vehicle entertainment and information processing device 100 may imply, that the vehicle entertainment and information processing device 100 requested access to the particular user selected data service previously and therefore obtained the necessary certificate in a previous session from the access control server 120 in a manner that will be explained next.

In case a certificate that is needed for the establishment of a secure SSL connection to the content server 130 is not available at the vehicle entertainment and information processing device 100, the vehicle entertainment and information processing device 100 may request the missing certificate from the access control server 120 in step 304. It has to be noted that the vehicle entertainment and information processing device 100 may be not allowed to obtain the missing certificate from either the designated content server 130 directly, nor from a trusted certificate authority 140.

In order to allow the access control server 120 to provide the correct certificate, the needed certificate(s) and/or the requested data service may be indicated by the vehicle entertainment and information processing device 100 in the request message sent to the access control server 120 via the attached network(s). This may be for example accomplished by sending the requested HTTPS-URL to the access control server 120.

Further, the request may comprise an identifier ID which allows the access control server 120 to uniquely identify the vehicle entertainment and information processing device 100. This information may be used by the access control server 120 to determine whether the requesting vehicle entertainment and information processing device 100 is allowed to receive the indicated data service offered from the content server 130 corresponding to the HTTPS-URL. Second, this information may also be necessary to be able to send the requested certificate(s) or an error message back to the vehicle entertainment and information processing device 100. The ID may be e.g. a unique ID identifying a vehicle or the vehicle entertainment and information processing device 100, i.e. an ID bound to a device/apparatus, or a unique ID identifying a individual user of the vehicle entertainment and information processing device 100, i.e. an ID bound to a particular person.

After sending the request for the certificate(s) to the access control server 120, the vehicle entertainment and information processing device 100 may await the response from the access control server 120 (see step 305). Upon expiry of a predetermined time interval, i.e. if the request times out, the vehicle entertainment and information processing device 100 will interrupt the service request of the user and outputs an appropriate error message to the user in step 306 using the either a display, speakers or both. For example, the error message may inform the user, that the access control server 120 did not respond while requesting the necessary certificate(s) or that the access control server 120 denied access to the service.

Upon receiving a response from the access control server 120 the flow advances to step 307. In case the vehicle entertainment and information processing device 100 received an access denied message, an appropriate error message may be displayed in step 306.

In case the response from the access control server 120 comprises the requested certificate(s), same may be stored at the vehicle entertainment and information processing device 100 in step 308

In case a browser is used to provide a requested service to the user, it may be necessary to restart the browser before further proceeding, since some browser may require that all certificates that are used have to be available before the start of the browser application as indicated by step 309. It has to be understood that this step is optional and may be only executed if required by the respective application used to provide the requested data service to the user.

After having stored the received certificate(s) at the vehicle entertainment and information processing device 100 in step 308 - and after having restarted the browser application 309 if necessary - the vehicle entertainment and information processing device 100 may retrigger the user request for the data service in step 310, i.e. the user's selected HTTPS-URL may be requested again.

Again the process continues with step 302, wherein the vehicle entertainment and information processing device 100 determines again whether all certificate(s) for setting up the SSL connections are available. Now, all necessary certificates may be stored at the vehicle entertainment and information processing device 100, such that the establishment of the SSL connection to the content server 130 may be performed in step 303.

Turning now to the participation of the access control server 120 in this process, step 311 illustrates the access control server 120 receiving the request for a user or automatically vehicle entertainment and information processing device 100 selected data service. Upon receiving the request, the access control server 120 may determine in step 312, whether the vehicle entertainment and information processing device 100 requesting is allowed to receive or use the desired data service. This may for example be accomplished by identifying the vehicle entertainment and information processing device 100 by its ID included in the request message and whether an access profile corresponding to the vehicle entertainment and information processing device 100 grants access to the requested data service. As outlined above the service requested by the vehicle entertainment and information processing device 100 may be also indicated in the request message.

In case the requesting vehicle entertainment and information processing device 100 is not allowed to access the service, the access control server 120 may send an access denied message in response to the request back to the vehicle entertainment and information processing device 100. Alternatively, the access control server 120 may initiate a registration or subscription procedure with the vehicle, entertainment and information processing device 100, allowing the user to subscribe for the selected data service. This option is however not shown in Fig. 3.

In case the vehicle entertainment and information processing device 100 is granted access to the data service, the access control server 120 may determine in step 313 whether the necessary certificate(s) is available locally, i.e. is already stored at the access control server 120. If this should be the case, the certificate(s) may be transmitted to the requesting vehicle entertainment and information processing device 100 in step 316.

If the certificate(s) is not available locally, the access control server 120 may request the certificate(s) from the designated content server 130 or a certificate authority 140 in step 314. Upon receiving the certificate(s) the access control server 120 may store the certificate(s) in step 315 and may forward same to the vehicle entertainment and information processing device 100 in step 316.

It is noted that this procedure allows the access control server 120 to control the access to data services of the vehicle entertainment and information processing device 100s by controlling the distribution of certificates.

As it may happen that a vehicle entertainment and information processing device 100 has stored a certificate which has not expired but the user of the vehicle entertainment and information processing device 100 unsubscribed from the corresponding data service, in another embodiment of this invention, the vehicle entertainment and information processing device 100 will request access to a data service each time the user - or an automation procedure of the vehicle entertainment and information processing device 100 - requests to connect to the service. In case a certificate for the requested data service may be stored locally at the vehicle entertainment and information processing device 100, same may only request from the server, whether the user is still allowed to use the service without causing a transmission of the certificate from the access control server 120 to the vehicle entertainment and information processing device 100. Hence, the access control server 120 may only indicate to the vehicle entertainment and information processing device 100, whether the service may be accessed or not.

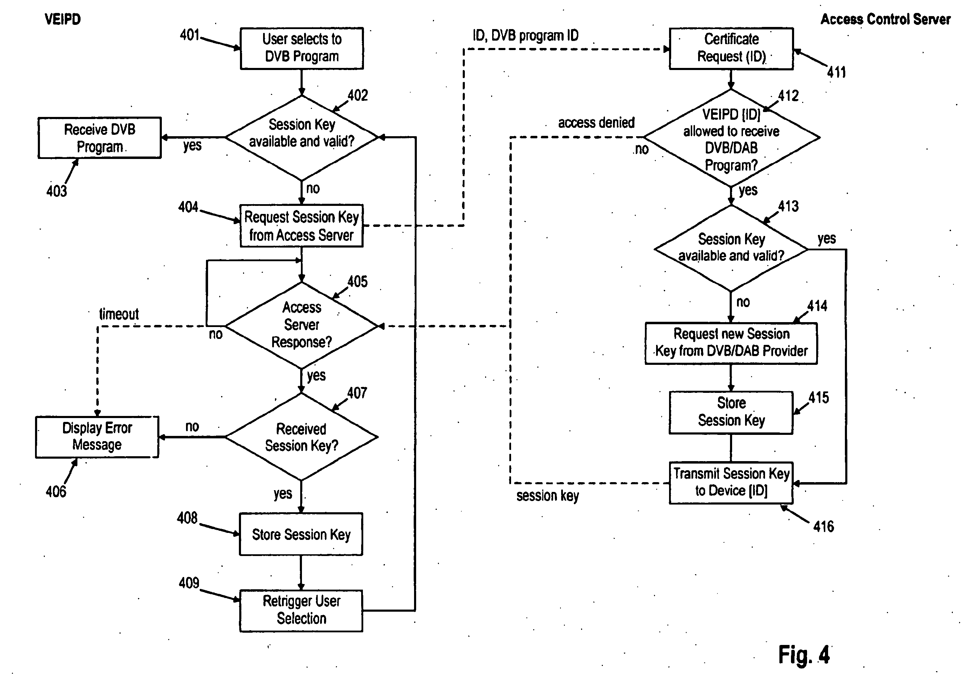

A comparable method as shown in Fig. 3 is illustrated in Fig. 4 for a situation in which the vehicle entertainment and information processing device 100 requests the reception of an encrypted DVB channel (or data service). Fig. 4 shows a flow chart of an access control mechanism for performed by a vehicle entertainment and information processing device 100 and an access control server 120 in a system according to Fig. 2. It should be noted that the methods shown in Fig. 3 and Fig. 4 may be both executed by a vehicle entertainment and information processing device 100 as shown in Fig. 2.

Upon user request - or an automated vehicle entertainment and information processing device's 100 request - of a particular data service, in this embodiment the request of a DVB/DAB program in step 401, the vehicle entertainment and information processing device 100 checks in step 402 whether a session key needed for decryption of the requested DVB/DAB program delivered from a content server 130, i.e. DVB/DAB provider 200 is available at the vehicle entertainment and information processing device 100 and whether it has not expired, i.e. is still valid. The vehicle entertainment and information processing device 100 may have stored the session key in its storage means.

If the session key is locally available, the vehicle entertainment and information processing device 100 may start to receive the DVB/DAB program and to decrypt its data in 403. E.g. in case DVB-S is employed the DVB/DAB receiver 201 of the vehicle entertainment and information processing device 100 may be tuned to the requested channel an may start receiving the data from satellite 202. It has to be noted here, that the vehicle entertainment and information processing device 100 may not need not download the session key from any server in this scenario. In more detail, the situation in which a session key is already locally available at the vehicle entertainment and information processing device 100 implies, that the vehicle entertainment and information processing device 100 requested access to the particular selected data service or DVB/DAB program previously and therefore obtained the necessary session key in a previous session from the access control server 120 in a manner that will be explained next. In case a session key that is needed for the decryption of the DVB/DAB program content is not available at the vehicle entertainment and information processing device 100, the vehicle entertainment and information processing device 100 may request the missing session key from the access control server 120 in step 404. It has to be noted that the vehicle entertainment and information processing device 100 may be not allowed to obtain the missing session key from the DVB/DAB provider 200.

In order to allow the access control server 120 to provide the correct session key, the requested data service or DVB/DAB program may be indicated by the vehicle entertainment and information processing device 100 in the request message sent to the access control server 120 via the attached network(s). This may be for example accomplished by sending the requested DVB/DAB program's channel code to the access control server 120.

Further, the request may comprise an identifier ID which allows the access control server 120 to uniquely identify the vehicle entertainment and information processing device 100. This information may be used by the access control server 120 to determine whether the requesting vehicle entertainment and information processing device 100 is allowed to receive the indicated DVB/DAB program offered from the DVB/DAB provider 200. Second, this information may also be necessary to be able to send the requested session key or an error message back to the vehicle entertainment and information processing device 100.

After sending the request for the session key to the access control server 120, the vehicle entertainment and information processing device 100 may await the response from the access control server 120 (see step 405). Upon expiry of a predetermined time interval, i.e. if the request times out, the vehicle entertainment and information processing device 100 will interrupt the service request of the user and outputs an appropriate error message to the user in step 406 using the either a display, speakers or both. For example, the error message may inform the user, that the access control server 120 did not respond while requesting the necessary session key for decryption or that the access control server 120 denied access to the DVB/DAB program.

Upon receiving a response from the access control server 120 the flow advances to step 407. In case the vehicle entertainment and information processing device 100 received an access denied message, an appropriate error message may be displayed in step 406.

In case the response from the access control server 120 comprises the requested session key, same may be stored at the vehicle entertainment and information processing device 100 in step 408.

After having stored the received certificate(s) at the vehicle entertainment and information processing device 100 in step 408, the vehicle entertainment and information processing device 100 may retrigger the user request for the DVB/DAB program in step 409.

Again the process may continue with step 402, wherein the vehicle entertainment and information processing device 100 determines again whether the session key for decryption of the DVB/DAB programs content is available. Now, the necessary session key may be stored at the vehicle entertainment and information processing device 100, such that the requested DVB/DAB program can be received, successfully decrypted and displayed to the user in step 403.

Turning now to the participation of the access control server 120 in this process, step 411 illustrates the access control server 120 receiving the request for a user or automatically vehicle entertainment and information processing device 100 selected DVB/DAB program. Upon receiving the request, the access control server 120 may determine in step 412, whether the vehicle entertainment and information processing device 100 requesting is allowed to receive or use the desired DVB/DAB program or data service. This may for example be accomplished by identifying the vehicle entertainment and information processing device 100 by its ID included in the request message and whether an access profile corresponding to the vehicle entertainment and information processing device 100 grants access to the requested data service. As outlined above the service requested by the vehicle entertainment and information processing device 100 may be also indicated in the request message.

In case the requesting vehicle entertainment and information processing device 100 is not allowed to access the service, the access control server 120 may send an access denied message in response to the request back to the vehicle entertainment and information processing device 100. Alternatively, the access control server 120 may initiate a registration or subscription procedure with the vehicle entertainment and information processing device 100, allowing the user to subscribe for the selected DVB/DAB program or data service. This option is however not shown in Fig. 4.

In case the vehicle entertainment and information processing device 100 is granted access to the data service, the access control server 120 may determine in step 413 whether the necessary session key is available locally, i.e. is already stored at the access control server 120. If this should be the case, the session key may be transmitted to the requesting vehicle entertainment and information processing device 100 in step 416.

If the session key is not available locally, the access control server 120 may request it from the DVB/DAB provider 200 in step 414.

Upon receiving the session key, the access control server 120 may store the session key in step 415 and may forward same to the vehicle entertainment and information processing device 100 in step 416.

It is noted that this procedure allows the access control server 120 to control the access to DVB/DAB programs of the vehicle entertainment and information processing device 100s by controlling the distribution of a session key.

As it may happen that a vehicle entertainment and information processing device 100 has stored a session key which has not expired but the user of the vehicle entertainment and information processing device 100 unsubscribed from the corresponding data service, in another embodiment of this invention, the vehicle entertainment and information processing device 100 will request access to a data service each time the user - or an automation procedure of the vehicle entertainment and information processing device 100 - requests to connect to the service. In case a session key for the requested data service may be stored locally at the vehicle entertainment and information processing device 100, same may only request from the server, whether the user is still allowed to use the service without causing a transmission of the certificate from the access control server 120 to the vehicle entertainment and information processing device 100. Hence, the access control server 120 may only indicate to the vehicle entertainment and information processing device 100, whether the service may be accessed or not.

Another possibility may be that the access control server 120 keeps track of the valid session keys provide to a vehicle entertainment and information processing device 100. Upon unsubscription from a data service the access control server 120 may cause the vehicle entertainment and information processing device 100 to delete the session key stored in the device, which corresponds to the service.

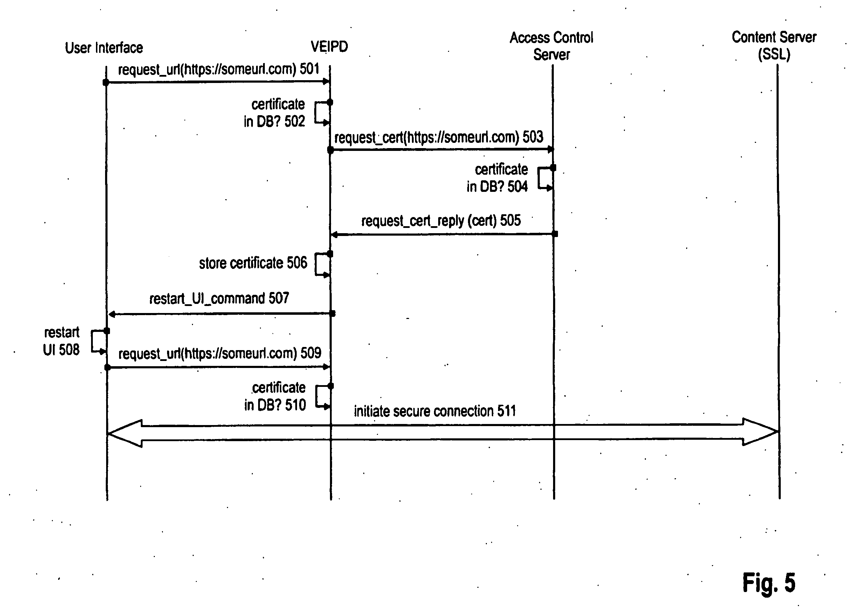

After having discussed the control procedures of Fig. 3 and Fig. 4 in detail, the message flow diagrams Fig. 5 to Fig. 8, illustrating the message flow between the different network entities shown in Fig. 1 will be discussed in the following.

Fig. 5 illustrates an exemplary message flow between network entities in an embodiment of this invention where a vehicle entertainment and information processing device 100 requests a certificate for a data service from the access control server 120, which has stored the requested certificate locally.

Upon the vehicle entertainment and information processing device 100 receiving a request for a HTTPS-URL from the user interface 105 (see reference numeral 501), the vehicle entertainment and information processing device 100 may determine whether the necessary certificate for the data service is locally available (see reference numeral 502). In the example illustrated, the certificate is not available, and therefore the vehicle entertainment and information processing device 100 may send a request message for the certificate to the access control server 120 (see reference numeral 503).

Upon receiving the request message from the vehicle entertainment and information processing device 100 the access control server 120 may determine, if the requesting device is allowed to access the service and if yes, whether the requested certificate is locally stored (see reference numeral 504). In the illustrated example, the certificate is stored at the access control server 120, such that it may be transmitted in a reply message from the access control server 120 to the vehicle entertainment and information processing device 100 (see reference numeral 505).

The vehicle entertainment and information processing device 100 may store the received certificate (see reference numeral 506) and - as explained in more detail above in reference to Fig. 3 and Fig. 4 - may optionally initiate a restart of the browser application used for providing the data service to the user (see reference numeral 507).

The user interface 105 may restart the browser application (see reference numeral 508) and may then retrigger the request for the data service (see reference numeral 509). As explained above, the vehicle entertainment and information processing device 100 may again check whether the certificate for the data service request from the user interface 105 is available (see reference numeral 510) which should be the case after having downloaded the respective certificate from the access control server 120

Hence, the vehicle entertainment and information processing device 100 may next initiate the setup of a secure SSL connection to the content provider of the data service (see reference numeral 511).

A variation of the message flow shown in Fig. 5 may be that the vehicle entertainment and information processing device 100 sends messages to the user interface 105 which are output to the user and inform same about the current status of his request. For example, upon the vehicle entertainment and information processing device 100 having requested a certificate a corresponding message may be output to the user. Another example would be that the user interface 105 informs the user upon the reception of the certificate from the access control server 120. Also error messages may be output as explained earlier in reference to Fig. 2 and Fig. 3.

Considering the request for a DVB/DAB program, the message flow may be almost similar to the one shown in Fig. 5. Upon tuning the vehicle entertainment and information processing device 100 to a desired encrypted DVB channel, the vehicle entertainment and information processing device 100 may perform the actions as explained in reference to Fig. 3. As no connection between the radio access network and the vehicle entertainment and information processing device 100 - i.e. no radio link of the radio module 101 - may be required for the reception of the DVB/DAB program by the DVB/DAB receiver 201, the vehicle entertainment and information processing device 100 may not have necessarily established a radio link to the network with using radio module 101. Hence, the vehicle entertainment and information processing device 100 may request permission from the user before establishing the link to the access control server 120 in order to download a required session key if it is not stored locally.

Instead of requesting a certificate as shown in Fig. 5, the session key for the DVB/DAB program may be requested from the access control server 120. The session key may be also stored at the vehicle entertainment and information processing device 100 upon its reception

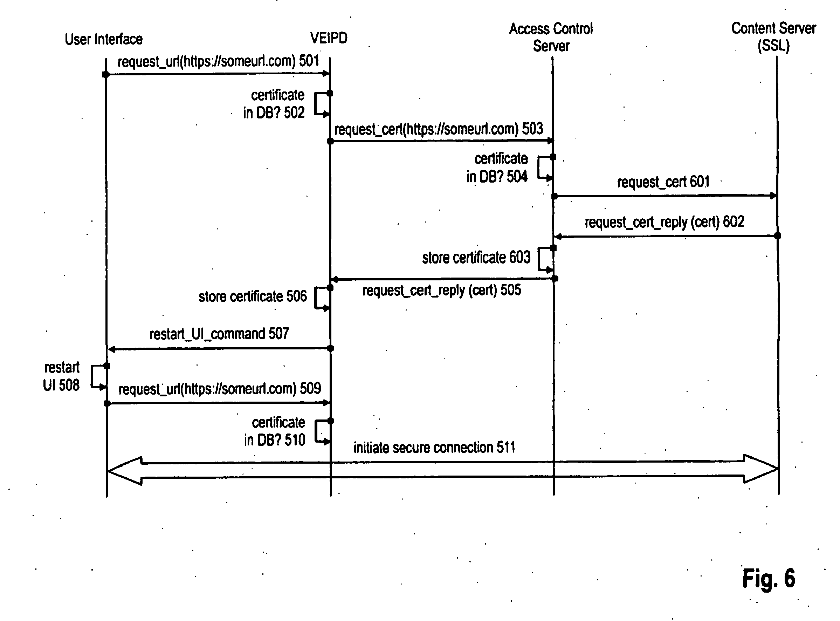

Next, Fig. 6 is discussed in more detail. Fig. 6 illustrates an exemplary message flow for the situation that the requested certificate is not available at the access control server 120 and same requests the certificate from the content server 130 providing a requested data service.

Upon determining at the access control server 120 that a requested certificate is not locally available (see reference numeral 504), the access control server 120 may send a certificate request message to the content server 130 providing the requested service (see reference numeral 601). This may for example be accomplished by a message according to the SSL protocol causing the content server 130 to respond with sending its certificate (see reference numeral 602). Upon receiving the certificate from the content server 130 at the access control server 120, same may store the certificate (see reference numeral 505). The following messages correspond to those shown in Fig. 5.

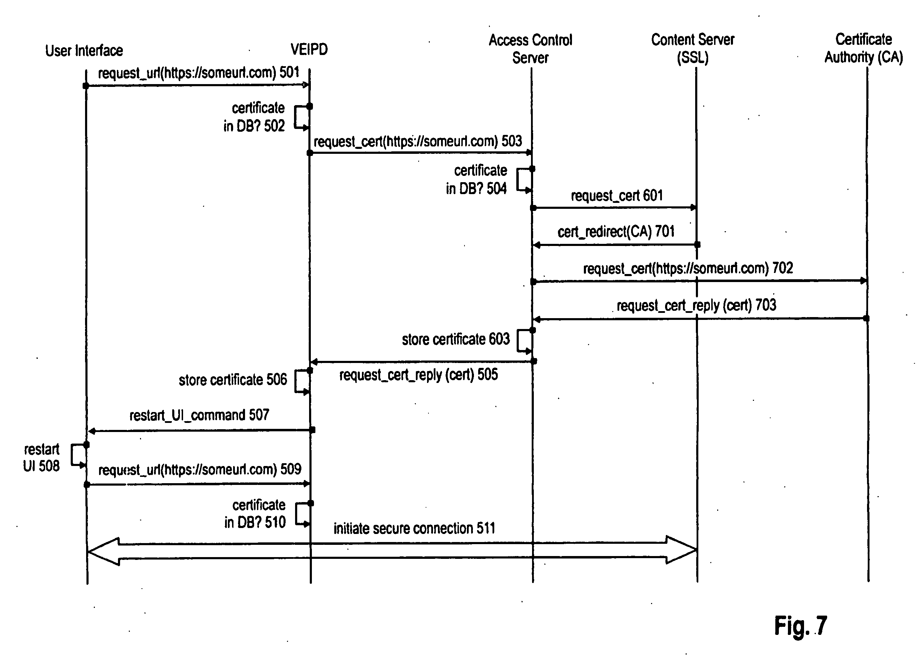

Next, a further exemplary message flow, is shown in Fig. 7. The message flow shown in Fig. 7 corresponds in great parts to the message flow shown in Fig. 6. Therefore, it is focused on the description of the additional messages in Fig. 7 in comparison to the messages shown in Fig.6.

Instead of the content server 130 replying with a message providing the requested certificate to the access control server 120 (see reference numeral 602 in Fig. 6), the content server 130 may redirect the access control server 120 to a certificate authority 140 in order to cause the access control server 120 to obtain the requested certificate from the certificate authority 140. Therefore, upon receiving a request for its certificate from the access control server 120 (see reference numeral 601) the content server 130 may reply with a redirect message indicating the certificate authority 140 at which the access control server 120 may obtain the needed certificate (see reference numeral 701)

Upon receiving this redirect message from the content server 130, the access control server 120 may send a certificate request message to the indicated certificate authority 140 (see reference numeral 702). The request message indicates for which data service or content server 130 the corresponding certificate is requested. In response to the request, the certificate authority 140 may reply by sending a reply message comprising the requested certificate for the content server 130 (see reference numeral 703). Upon reception of the certificate by the access control server 120, same may store the certificate (see reference numeral 603) and forward the certificate to the vehicle entertainment and information processing device 100 (see reference numeral 505). The remaining messages correspond to those shown in Fig. 6.

In a further embodiment of this invention, the access to data services and DVB/DAB programs is still controlled via the provision of certificates or session keys to the vehicle entertainment and information processing device 100, but differs from the methods shown above in that the vehicle entertainment and information processing device 100 may contact the content server 130 or the DVB/DAB provider 200 directly.

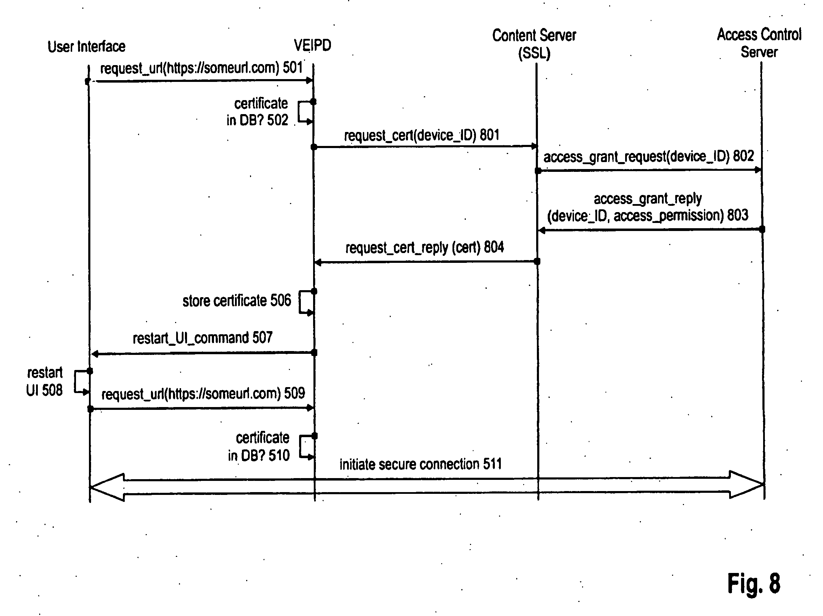

Fig. 8 shows messages flows between the different network entities shown in Fig. 1 according to the above mentioned alternative access control method according to an embodiment of this invention. The messages corresponding to those of Fig. 5 will only be briefly discussed. Upon the user interface 105 requests a data service (see reference numeral 501) and the vehicle entertainment and information processing device 100 has determined that a certificate necessary for the provision of the requested data service is not locally available (see reference numeral 502), the vehicle entertainment and information processing device 100 may request the certificate directly from the content server 130 providing the requested service (see reference numeral 801). The content server 130 receives the request from the vehicle entertainment and information processing device 100 which also comprises an ID uniquely identifying the requesting vehicle entertainment and information processing device 100.

Upon reception, the content server 130 may contact the access control server 120 by a message comprising the ID obtained from the vehicle entertainment and information processing device's 100 request and the an indication of the requested data service (see reference numeral 802). This access grant message may be used by the content server 130, whether the encrypted data service requesting device is allowed to receive the requested service.

The access control server 120 may extract the vehicle entertainment and information processing device's 100 ID and the indication of its request service from the access grant message. Based on this information the access control server 120 may determine whether the vehicle entertainment and information processing device 100 is allowed to access the requested service at the content server 130. By sending a access grant reply back to the content server 130, the access control server 120 may indicate whether the vehicle entertainment and information processing device 100 is allowed to use/receive the requested data service (see reference numeral 803).

If the access control server 120 indicates to the deny the service to the vehicle entertainment and information processing device 100, the content server 130 may indicate this by using a suitable message transmitted to the vehicle entertainment and information processing device 100. In this case the content server 130 will not provide its certificate to the vehicle entertainment and information processing device 100, such that the vehicle entertainment and information processing device 100 may not establish a SSL connection for the requested data service to the content server 130.

In case the access control server 120 indicated to the content server 130 that the vehicle entertainment and information processing device 100 is allowed to access the requested data service, the content server 130 may respond to the vehicle entertainment and information processing device's 100 request, by a reply message comprising the its certificate (see reference numeral 804)

Upon receiving the content server 130's certificate, same may be stored by the vehicle entertainment and information processing device 100 (see reference numeral 506). The further messages exchanged between user interface 105 and vehicle entertainment and information processing device 100 (see reference numeral 507, 508, 509, 510 and 511) correspond to those of Fig. 5. Therefore, for their detailed description it is referred to the respective text passages above.

For obtaining a session key for an encrypted DVB/DAB program, a similar procedure as shown in Fig. 8 may be used. Again, the vehicle entertainment and information processing device 100 may request the user's permission to establish a radio link between the vehicle entertainment and information processing device 100 and the radio access network, before the vehicle entertainment and information processing device 100 requests the session key for the desired encrypted DVB/DAB program from the DVB/DAB provider 200. As explained in a similar manner in reference to Fig. 8, the DVB/DAB provider 200 may request permission from the access control server 120 to provide the necessary session key to the vehicle entertainment and information processing device 100.

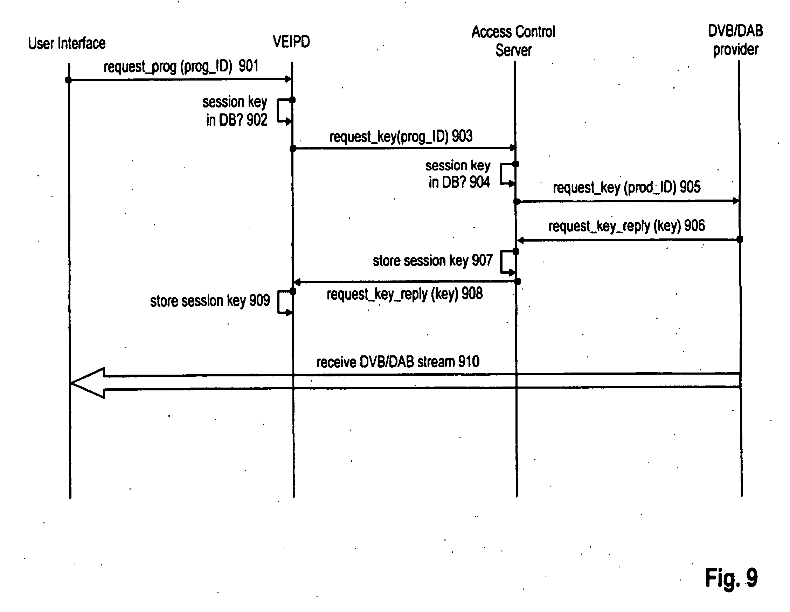

Next, the distribution of session keys for the decryption of DAB and/or DVB programs is more closely discussed in reference to Fig. 9 to Fig. 11.

Fig. 9 shows a message flow between different network entities shown in Fig. 2 in an access control method according to another embodiment of the present invention. Upon user request - or an automated vehicle entertainment and information processing device's 100 request - of a particular data service, in this embodiment the request of a DVB/DAB program 901, the vehicle entertainment and information processing device 100 may check 902 whether a session key needed for decryption of the requested DVB/DAB program (prog_ID) DVB/DAB provider 200 is available at the vehicle entertainment and information processing device 100. Further the device 100 may determine whether the session key has not expired in case the session key is available locally. The vehicle entertainment and information processing device 100 may have stored the session key in its storage means.

If the session key is locally available, the vehicle entertainment and information processing device 100 may directly start to receive the DVB/DAB program and to decrypt its data (not shown in Fig. 9).

In case a session key that is needed for the decryption of the DVB/DAB program content is not available at the vehicle entertainment and information processing device 100 or has expired, the vehicle entertainment and information processing device 100 may request 903 the missing session key from the access control server 120 using a request message indicating the desired program (prog_ID). Further, the request may comprise an identifier ID which allows the access control server 120 to uniquely identify the vehicle entertainment and information processing device 100.

Next the access control server 120 may determine whether the session key for the requested program is locally available. If so, the procedure would continue with sending a reply message comprising the session key to the vehicle entertainment and information processing device 100 (see message 908). In the example shown, the session key is requested from a DVB/DAB provider 200 by sending key request message 905 from the access control server 120 to the DVB/DAB provider 200. Upon reception of this message the DVB/DAB provider 200 may provide 906 the requested session key, e.g. identified by a DVB/DAB program identifier in the request message 905, to the content server 120 in a reply message.

The session key may be stored 909 by the access control server and may be forwarded 908 to the vehicle entertainment and information processing device 100.

The vehicle entertainment and information processing device 100 may store the session key and may restart the user interface 507, 508 as explained above e.g. in reference to Fig. 5. Upon storing the session key, the vehicle entertainment and information processing device 100 may start to receive the DVB/DAB program and to decrypt its data stream using the session key 910.

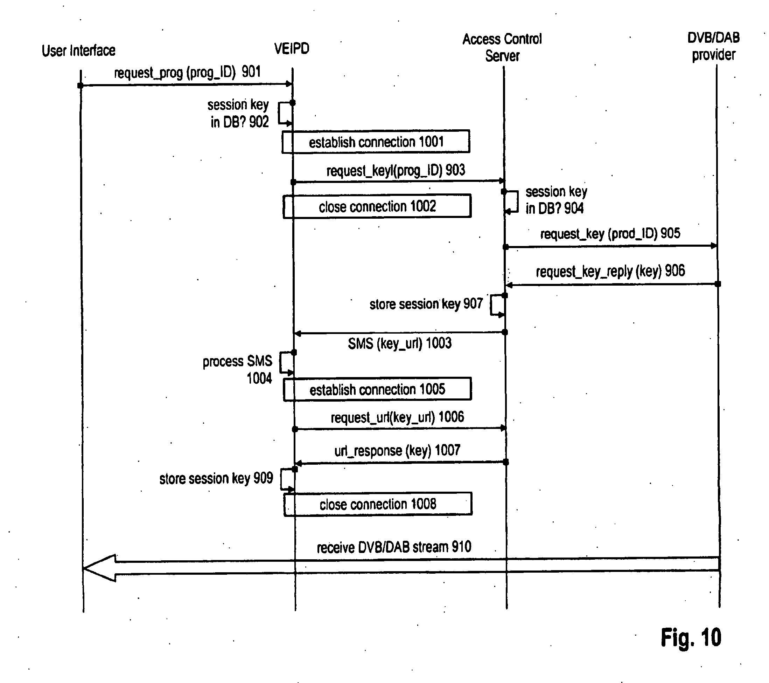

Next, an alternative provision mechanism for a session key according to another embodiment of this invention is explained in reference to Fig. 10. Fig. 10 shows a message flow between different network entities shown in Fig. 2 in an access control method. The process depicted in the figure differs from the method of Fig. 9 in that the vehicle entertainment and information processing device 100 may not maintain an connection the access control server 120 during the whole session key download. As indicated by blocks 1001 and 1002, the vehicle entertainment and information processing device 100 may establish a communication channel to the radio access network of the radio access provider 110 before requesting the session key with a request message 903. After having transmitted this message 903 the vehicle entertainment and information processing device 100 may tear down the communication channel to the radio access network (see block 1002). This may be especially applicable when trying to avoid extra costs implied by time-based charges for accessing a radio access network.

As no communication channel from the vehicle entertainment and information processing device 100 to the radio access network exists when the access control server receives a session key 906 or has a valid session key locally available, the access control server 120 may use an separate message which may be delivered to the vehicle entertainment and information processing device 100 through the radio access network to transmit information identifying an location at the access control server 120 at which the vehicle entertainment and information processing device 100 may obtain the requested access information (i.e. session key). For this purpose, e.g. an SMS (Short Message Service) or MMS (Multimedia Messaging Service) message comprising the URL may be sent 1003 to the vehicle entertainment and information processing device 100.

Upon receiving the message and analyzing 1004 its content, the vehicle entertainment and information processing device 100 may establish 1005 a communication channel to the radio access network again, and may request 1006 the session key from the URL provided by the access control server 120, e.g. in the SMS.

In response to the request, the access control server 120 may provide 1007 the session key to the vehicle entertainment and information processing device 100. Upon receiving the session key at the vehicle entertainment and information processing device 100, the communication channel to the radio access network may be closed 1008.

The remaining steps correspond to those described in reference to Fig. 5 and 9 above.

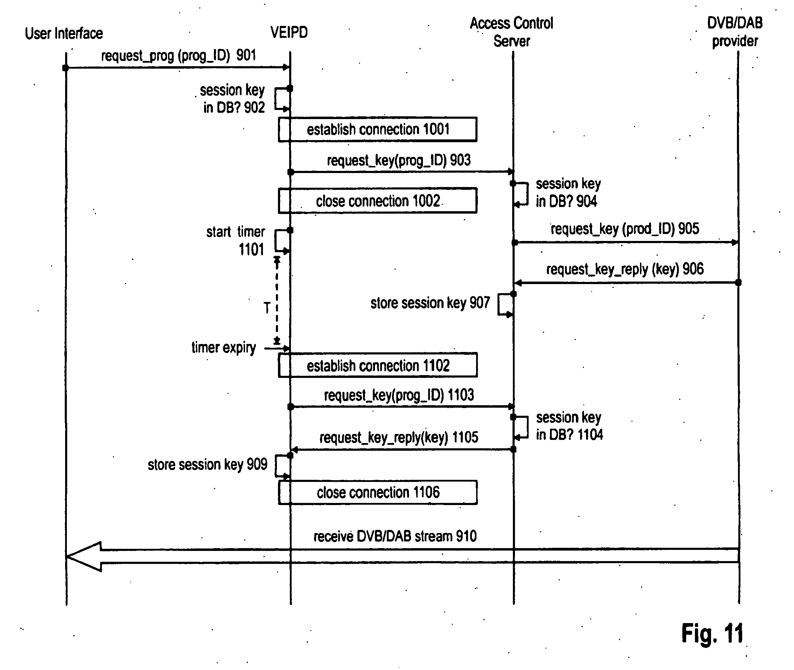

A further modification of the method shown in Fig. 10 is depicted in Fig. 11. Also Fig. 11 shows a message flow between different network entities shown in Fig. 2 in an access control method according to another embodiment of the present invention.

Instead of the access control server 120 pushing a message (see SMS 1003 in Fig. 10) to the vehicle entertainment and information processing device 100 to inform same about the availability of access information to the requested DVB/DAB stream, a timer in the vehicle entertainment and information processing device 100 is used to trigger the establishment of a communication channel 1005 to the access control server 120. Upon expiry of a timer T and the establishment of the communication channel, the vehicle entertainment and information processing device 100 may (re)transmit 1102 a request for the session key to the access control server 120. The access control server 120 may check 1103, whether the session key associated with the DVB/DAB program identifier prog_ID provided in the request is available at the access control server. Advantageously the timer period T may be chosen such that it is ensured with a high probability that a session key already requested in a previous step 903 has already been obtained from a third source by the access control server (see messages 905 and 906) and may have been stored 907 at the access control server, prior to the (re)transmission of the request 1102.

Hence, upon receiving the request 1102 at the access control server 120 the requested session key should be available. Nevertheless, the access control server 120 may check 1103 the availability of the session key and may forward same, if locally stored, to the vehicle entertainment and information processing device 100 in a reply message 1106.

If the access control server 120 determines at step 1103 that the session key is not stored at the access control server 120, the determination result may be indicated to the vehicle entertainment and information processing device 100 in a message. In this case, upon reception of this negative feedback message, the vehicle entertainment and information processing device 100 may restart the timer T and may request the session key another time upon timer expiry. In case the timer has been restarted a predetermined number of times and the session key could not be obtained by the vehicle entertainment and information processing device 100 from the access control server 120, the device 100 may assume that the session key is not available or could not be obtained by the access control server 120 and may e.g. display an error message to the user.

Alternatively or supplementary, when sending the negative feedback to the vehicle entertainment and information processing device 100, the access control server 120 may indicate the reason for the failure to obtain a session key. A respective message or notification may then be provided to the user of the vehicle entertainment and information processing device 100.

It should be noted that the principles underlying the embodiments of this invention described with reference to the various figures are applicable for obtaining access information in any form, e.g. certificates or session keys. With a mechanism similar to using a message informing the vehicle entertainment and information processing device 100 on the availability of access information on the access control server 120, in order to allow the device 100 to establish a new communication channel and to obtain the access information from a specified location on the access control server 120 (see reference numerals 1003-1008 in Fig. 10), certificates may be downloaded from the access control server 120 by the vehicle entertainment and information processing device 100.

Further, also a timer may be employed in a similar manner to (re)establish a communication channel from the vehicle entertainment and information processing device 100 to the access control server 120, and to obtain the access information in form of certificates from an indicated location at the access control server 120 (see reference numerals 1101-1106 in Fig. 11)

Also a similar method to the one shown in Fig. 8 may be implemented for obtaining a session key from the content provider 130, i.e. an DVB/DAB provider 200 in this case.

## Claims

1. An access control method for controlling access to data services in a networked system comprising a content server (130, 200) providing a data service using data in encrypted form, a vehicle entertainment and information processing device (100) and an access control server (120), the method comprising the steps of:
the vehicle entertainment and information processing device (100) requesting access (304, 404) to the data service at the access control server (120),
the access control server (120) determining (312, 412), whether the vehicle entertainment and information processing device (100) is allowed to access the requested data service, and
only if the access control server (120) has determined that the vehicle entertainment and information processing device (100) is allowed to access the data service, the access control server (120) providing access information (316, 416) related to the data service to the vehicle entertainment and information processing device (100),
wherein the access information is a certificate used by the vehicle entertainment and information processing device (100) to exchange encrypted service data with the content server (130) or a session key used by the vehicle entertainment and information processing device (100) to decrypt the encrypted data of an audio or video broadcast service provided by the content server (200).

2. The access control method according to claim 1, further comprising the step of the vehicle entertainment and information processing device (100) receiving the encrypted data service (403) from the content server (130, 200) using the access information received from the access control server (120).

3. The access control method according to claim 1, further comprising the step of the vehicle entertainment and information processing device (100) setting up an (303) encrypted connection to the content server (130, 200) using the access information received from the access control server (120), and
exchanging encrypted connection data (511) related to the data service between the vehicle entertainment and information processing device (100) and the content server (130, 200).

4. The access control method according to one of claims 1 to 3, further comprising the steps of the vehicle entertainment and information processing device (100) determining whether the access information is stored (502, 902) in the vehicle entertainment and information processing device (100), and
if the access information is stored in the vehicle entertainment and information processing device (100), the vehicle entertainment and information processing device (100) setting up (303) an encrypted connection to the content server (130) or decrypting (403) encrypted data of the data service provided by the content server (200) using the stored access information.

5. The access control method according to one of claims 1 to 4, further comprising the steps of the access control server (120) determining whether the access information is stored (504) at the access control server (120), and
if the access information is not stored at the access control server (120), the access control server (120) requesting (314, 601) the access information from the content server (130, 200) or a certificate authority (140).

6. The access control method according to claim 5, further comprising the step of the access control server (120) receiving and storing (315, 603) the access information received from the content server (130, 200) or the certificate authority (140).

7. The method according to one of claims 1 to 6, wherein the step of the access control server (120) providing access information (316, 416) related to the data service to the vehicle entertainment and information processing device (100) comprises:
transmitting a message (1003) from the access control server (120) to the vehicle entertainment and information processing device (100) indicating a location at the access control server (120) from which the access information may be obtained by the vehicle entertainment and information processing device (100).

8. The method according to claim 7, wherein the step of providing access information (316, 416) to the vehicle entertainment and information processing device (100) further comprises
the vehicle entertainment and information processing device (100) requesting (1006) the access information from the access control server (120) at the location indicated upon receiving the message, and
the access control server (120) transmitting (1007) the access information to the vehicle entertainment and information processing device (100).

9. The method according to one of claims 1 to 6, further comprising the step of starting a timer upon having requested access (304, 404) to the data service at the access control server (120).

10. The method according to claim 9, wherein the step of providing access information (316, 416) related to the data service to the vehicle entertainment and information processing device (100) further comprises
the vehicle entertainment and information processing device (100) requesting (1103) the access information from the access control server (120) upon expiry of the timer, and
the access control server (120) providing (1105) the access control information to the vehicle entertainment and information processing device (100).

11. The access control method according to one of claims 1 to 10, wherein the access request of the vehicle entertainment and information processing device (100) to the access control server (120) indicates the data service to which access is requested and/or an identifier of the requesting vehicle entertainment and information processing device (100).

12. The method according to one of claims 1 to 11, further comprising the step of providing the data service to a user of the vehicle entertainment and information processing device (100) employing a browser application.

13. The method according to one of claims 1 to 12, further comprising the step of the vehicle entertainment and information processing device (100) storing the access information (308, 408) at a storage means (107) of the vehicle entertainment and information processing device (100).

14. The method according to claim 13, further comprising the step of restarting (309) the browser application upon storing the information relating to the content server (130, 200) at the vehicle entertainment and information processing device (100).

15. The method according to one of claims 1 to 14, further comprising the step of the vehicle entertainment and information processing device (100) retriggering the request for the data service.

16. The method according to one of claims 1 to 15, wherein the access control server (120) determines whether the vehicle entertainment and information processing device (100) is allowed to access the requested data service based on an identifier uniquely identifying the vehicle entertainment and information processing device (100).

17. The method according to one of claims 1 to 16, further comprising the step of the access control server (120) initiating a subscription process for allowing the vehicle entertainment and information processing device (100) to subscribe to the requested data service, if the access control server (120) determines that the vehicle entertainment and information processing device (100) is not allowed to access the requested data service.

18. The method according to one of claims 1 to 17, wherein the vehicle entertainment and information processing device (100) accesses the networked system via a radio link.

19. A vehicle entertainment and information processing device (100) for use in a network comprising a content server (130, 200) providing a data service using data in encrypted form, the vehicle entertainment and information processing device (100) and an access control server (120), wherein the vehicle entertainment and information processing device (100) comprises:
a radio module (101) for requesting access (304, 404) to the data service at the access control server (120), and
wherein the radio module (101) is adapted to receive access information (316, 416) related to the data service to the vehicle entertainment and information processing device (100) from the access control server (120), only if the access control server (120) has determined that the vehicle entertainment and information processing device (100) is allowed to access the requested data service,
wherein the access information (316, 416) is a certificate and the vehicle entertainment and information processing device (100) comprises means (103) for exchanging encrypted service data with the content server (130) using the certificate, or the access information (316, 416) is a session key and the vehicle entertainment and information processing device (100) comprises means (103) to decrypt the encrypted data of an audio or video broadcast service provided by the content server (200) using the session key.

20. An access control server (120) for use in a network comprising a content server (130, 200) providing a data service using data in encrypted form, a vehicle entertainment and information processing device (100) and the access control server (120) connected to each other via a network, wherein the access control server (120) comprises:
reception means for receiving a request for access (304, 404) to the data service from vehicle entertainment and information processing device (100),
determining means for determining, whether the vehicle entertainment and information processing device (100) is allowed to access the requested data service, and
transmission means for transmitting access information (316, 416) related to the data service to the vehicle entertainment and information processing device (100) from the access control server (120), only if the access control server (120) has determined that the vehicle entertainment and information processing device (100) is allowed to access the requested data service,
wherein the access information is a certificate used by the vehicle entertainment and information processing device (100) to exchange encrypted service data with the content server (130) or a session key used by the vehicle entertainment and information processing device (100) to decrypt the encrypted data of an audio or video broadcast service provided by the content server (200).

21. A networked system comprising a content server (130, 200) providing a data service using data in encrypted form, a vehicle entertainment and information processing device (100) according to claim 19 and an access control server.

## Patentansprüche

1. Zugriffssteuerungs-Verfahren zum Steuern von Zugriff auf Datendienste in einem vernetzten System, das einen Content-Server (130, 200), der einen Datendienst unter Verwendung von Daten in verschlüsselter Form bereitstellt, eine Fahrzeug-Unterhaltungs-und-Informationsverarbeitungs-Vorrichtung (100) und einen Zugriffssteuerungs-Server (120) umfasst, wobei das Verfahren die folgenden Schritte umfasst:
Anfordern von Zugriff (304, 404) auf den Datendienst an dem Zugriffssteuerungs-Server (120) durch die Fahrzeug-Unterhaltungs-und-Informationsverarbeitungs-Vorrichtung (100),
Feststellen (312, 412) durch den Zugriffssteuerungs-Server (120), ob die Fahrzeug-Unterhaltungs-und-Informationsverarbeitungs-Vorrichtung (100) auf den angeforderten Datendienst zugreifen darf, und
nur wenn der Zugriffssteuerungs-Server (120) festgestellt hat, dass die Fahrzeug-Unterhaltungs-und-Informationsverarbeitungs-Vorrichtung (100) auf den Datendienst zugreifen darf, Bereitstellen von Zugriffsinformationen (316, 416), die sich auf den Datendienst beziehen, durch den Zugriffssteuerungs-Server (120) für die Fahrzeug-Unterhaltungs-und-Informationsverarbeitungs-Vorrichtung (100),
wobei die Zugriffsinformationen ein Zertifikat, das von der Fahrzeug-Unterhaltungs-und-Informationsverarbeitungs-Vorrichtung (100) verwendet wird, um verschlüsselte Dienstdaten mit dem Content-Server (130) auszutauschen, oder ein Sitzungsschlüssel sind, der von der Fahrzeug-Unterhaltungs-und-Informationsverarbeitungs-Vorrichtung (100) verwendet wird, um die verschlüsselten Daten eines Audio- oder Video-Rundfunkdienstes zu entschlüsseln, der durch den Content-Server (200) bereitgestellt wird.

2. Zugriffssteuerungs-Verfahren nach Anspruch 1, das des Weiteren den Schritt umfasst, in dem die Fahrzeug-Unterhaltungs-und-Informationsverarbeitungs-Vorrichtung (100) den verschlüsselten Datendienst (403) von dem Content-Server (130, 200) unter Verwendung der von dem Zugriffssteuerungs-Server (120) empfangenen Zugriffsinformationen empfängt.

3. Zugriffssteuerungs-Vertahren nach Anspruch 1, das des Weiteren den Schritt umfasst, in dem die Fahrzeug-Unterhaltungs-und-Informationsverarbeitungs-Vorrichtung (100) eine verschlüsselte Verbindung zu dem Content-Server (130, 200) unter Verwendung der von dem Zugriffssteuerungs-Server (120) empfangenen Zugriffsinformationen einrichtet (303), und
verschlüsselte Verbindungsdaten (511), die sich auf den Datendienst beziehen, zwischen der Fahrzeug-Unterhaltungs-und-Informationsverarbeitungs- Vorrichtung (100) und dem Content-Server (130, 200) ausgetauscht werden.

4. Zugriffssteuerungs-Verfahren nach einem der Ansprüche 1 bis 3, das des Weiteren die Schritte umfasst, in denen die Fahrzeug-Unterhaltungs-und-Informationsverarbeitungs-Vorrichtung (100) feststellt, ob die Zugriffsinformationen in der Fahrzeug-Unterhaltungs-und-Informationsverarbeitungs-Vorrichtung (100) gespeichert sind (502, 902) und
wenn die Zugriffsinformationen in der Fahrzeug-Unterhaltungs-und-Informationsverarbeitungs-Vorrichtung (100) gespeichert sind, die Fahrzeug-Unterfialtungs-und-Informationsverarbeitungs-Vorrichtung (100) eine verschlüsselte Verbindung zu dem Content-Server (130) einrichtet (303) oder verschlüsselte Daten des durch den Content-Server (200) bereitgestellten Datendienstes unter Verwendung der gespeicherten Zugriffsinformationen entschlüsselt (403).

5. Zugriffssteuerungs-Verfahren nach einem der Ansprüche 1 bis 4, das des Weiteren die Schritte umfasst, in denen der Zugriffssteuerungs-Server (120) feststellt, ob die Zugriffsinformationen an dem Zugriffssteuerungs-Server (120) gespeichert sind (504), und
wenn die Zugriffsinformationen nicht an dem Zugriffssteuerungs-Server (120) gespeichert sind, der Zugriffssteuerungs-Server (120) die Zugriffsinformationen von dem Content-Server (130, 200) oder einer Certificate Authority (140) anfordert (314, 601).

6. Zugriffssteuerungs-Verfahren nach Anspruch 5, das des Weiteren den Schritt umfasst, in dem der Zugriffssteuerungs-Server (120) die von dem Content-Server (130, 200) oder der Certificate Authority (140) empfangenen Zugriffsinformationen empfängt und speichert (315, 603).

7. Verfahren nach einem der Ansprüche 1 bis 6, wobei der Schritt, in dem der Zugriffssteuerungs-Server (120) Zugriffsinformationen (316, 416), die sich auf den Datendienst beziehen, der Fahrzeug-Unterhaltungs-und-Informationsverarbeitungs-Vorrichtung (100) bereitstellt, umfasst:
Senden einer Nachricht (1003) von dem Zugriffssteuerungs-Server (120) zu der Fahrzeug-Unterhaltungs-und-Informationsverarbeitungs-Vorrichtung (100), die einen Ort des Zugriffssteuerungs-Servers (120) anzeigt, von der die Zugriffsinformationen durch die Fahrzeug-Unterhaltungs-und-Informationsverarbeitungs-Vonichtung (100) bezogen werden können.

8. Verfahren nach Anspruch 7, wobei der Schritt des Bereitstellens von Zugriffsinformationen (316, 416) für die Fahrzeug-Unterhaltungs-und-Informationsverarbeitungs-Vorrichtung (100) des Weiteren umfasst, dass
die Fahrzeug-Unterhaltungs-und-Informationsverarbeitungs-Vorrichtung (100) nach Empfangen der Nachricht die Zugriffsinformationen von dem Zugriffssteuerungs-Server (120) von dem angezeigten Ort anfordert (1006), und
Zugriffssteuerungs-Server (120) die Zugriffsinformationen zu der Fahrzeug-Unterhaltungs-und-Informationsverarbeitungs-Vorrichtung (100) sendet.

9. Verfahren nach einem der Ansprüche 1 bis 6, das des Weiteren, nachdem Zugriff (304, 404) auf den Datendienst an dem Zugriffssteuerungs-Server (120) angefordert worden ist, den Schritt des Startens eines Timers umfasst.

10. Verfahren nach Anspruch 9, wobei der Schritt des Bereitstellens von Zugriffsinformationen (316, 416), die sich auf den Datendienst beziehen, für die Fahrzeug-Unterhaltungs-und-Informationsverarbeitungs-Vorrichtung (100) des Weiteren umfasst, dass
die Fahrzeug-Unterhaltungs-und-Informationsverarbeitungs-Vorrichtung (100) nach Ablaufen des Timers die Zugriffsinformationen von dem Zugriffssteuerungs-Server (120) anfordert, und
der Zugriffssteuerungs-Server (120) die Zugriffssteuerungs-Informationen der Fahrzeug-Unterhaltungs-und-Informationsverarbeitungs-Vorrichtung (100) bereitstellt.

11. Zugriffssteuerungs-Verfahren nach einem der Ansprüche 1 bis 10, wobei die Zugriffsanforderung der Fahrzeug-Unterhaltungs-und-Informationsverarbeitungs-Vorrichtung (100) an den Zugriffssteuerungs-Server (120) den Datendienst, auf den Zugriff gefordert wird, und/oder eine Kennung der anfordernden Fahrzeug-Unterhaltungs-und-Informationsverarbeitungs-Vorrichtung (100) anzeigt.

12. Verfahren nach einem der Ansprüche 1 bis 11, das des Weiteren den Schritt des Bereitstellens des Datendienstes für einen Benutzer der Fahrzeug-Unterhaltungs-und-Informationsverarbeitungs-Vorrichtung (100) unter Verwendung einer Browser-Anwendung umfasst.

13. Verfahren nach einem der Ansprüche 1 bis 12, das des Weiteren den Schritt umfasst, in dem die Fahrzeug-Untefialtungs-und-Informationsverarbeitungs-Vorrichtung (100) die Zugriffsinformationen an einer Speichereinrichtung (107) der Fahrzeug-Unterhaltungs-und-Informationsverarbeitungs-Vorrichtung (100) speichert.

14. Verfahren nach Anspruch 13, das des Weiteren den Schritt des Neustartens (309) der Browser-Anwendung nach dem Speichern der Informationen, die sich auf den Content-Server (130, 200) beziehen, an der Fahrzeug-Unterhaltungs-und-Informationsverarbeitungs-Vorrichtung (100) umfasst.

15. Verfahren nach einem der Ansprüche 1 bis 14, das des Weiteren den Schritt des erneuten Auslösens der Anforderung des Datendienstes durch die Fahrzeug-Unterhaltungs-und-Informationsverarbeitungs-Vorrichtung (100) umfasst.

16. Verfahren nach einem der Ansprüche 1 bis 15, wobei der Zugriffssteuerungs-Server (120) auf Basis einer Kennung, die die Fahrzeug-Unterhaltungs-und-Informationsverarbeitungs-Vorrichtung (100) eindeutig identifiziert, feststellt, ob die Fahrzeug-Unterhaltungs-und-Informationsverarbeitungs-Vorrichtung (100) auf den angeforderten Datendienst zugreifen darf.

17. Verfahren nach einem der Ansprüche 1 bis 16, das des Weiteren den Schritt umfasst, in dem der Zugriffssteuerungs-Server (120) einen Abonnementprozess initialisiert, der es der Fahrzeug-Unterhaltungs-und-Informationsverarbeitungs-Vorrichtung (100) gestattet, den angeforderten Datendienst zu abonnieren, wenn der Zugriffssteuerungs-Server (120) feststellt, dass die Fahrzeug-Unterhaltungs-und-Informationsverarbeitungs-Vorrichtung (100) nicht auf den angeforderten Datendienst zugreifen darf.

18. Verfahren nach einem der Ansprüche 1 bis 16 wobei die Fahrzeug-Unterhaltungs-und-Informationsverarbeitungs-Vorrichtung (100) über eine Funkverbindung auf das vernetzte System zugreift.

19. Fahrzeug-Unterhaltungs-und-Informationsverarbeitungs-Vorrichtung (100) zum Einsatz in einem Netzwerk, das einen Content-Server (130, 200), der einen Datendienst unter Verwendung von Daten in verschlüsselter Form bereitstellt, die Fahrzeug-Unterhaltungs-und-Informationsverarbeitungs-Vorrichtung (100) und einen Zugriffssteuerungs-Server (120) umfasst, wobei die Fahrzeug-Untefialtungs-und-Informationsverarbeitungs-Vorrichtung (100) umfasst:
ein Funkmodul (101) zum Anfordern von Zugriff (304, 404) auf den Datendienst an dem Zugriffssteuerungs-Server (120), und
wobei das Funkmodul (101) so eingerichtet ist, dass es Zugriffsinformationen (316, 416) für die Fahrzeug-Unterhaltungs-und-Informationsverarbeitungs-Vorrichtung (100), die sich auf den Datendienst beziehen, von dem Zugriffssteuerungs-Server (120) nur empfängt, wenn der Zugriffssteuerungs-Server (120) festgestellt hat, dass die Fahrzeug-Unterhaltungs-und-Informationsverarbeitungs-Vorrichtung (100) auf den angeforderten Datendienst zugreifen darf,
wobei die Zugriffsinformationen (316, 416) ein Zertifikat sind und die Fahrzeug-Unterhaltungs-und-Informationsverarbeitungs- Vorrichtung (100) eine Einrichtung (103) zum Austauschen verschlüsselter Dienstdaten mit dem Content-Server (130) unter Verwendung des Zertifikats umfasst, oder die Zugriffsinformationen (316, 416) ein Sitzungsschlüssel sind und die Fahrzeug-Unterhaltungs-und-Informationsverarbeitungs-Vorrichtung (100) eine Einrichtung (103) zum Entschlüsseln der verschlüsselten Daten eines durch den Content-Server (200) bereitgestellten Audio- oder Video-Rundfunkdienstes unter Verwendung des Sitzungsschlüssels umfasst.

20. Zugriffssteuerungs-Server (120) zum Einsatz in einem Netzwerk, das einen Content-Server (130, 200), der einen Datendienst unter Verwendung von Daten in verschlüsselter Form bereitstellt, eine Fahrzeug-Unterhaltungs-und-Informationsverarbeitungs-Vorrichtung (100) und den Zugriffssteuerungs-Server (120) umfasst, die miteinander über ein Netzwerk verbunden sind, wobei der Zugriffssteuerungs-Server (120) umfasst:
eine Empfangseinrichtung zum Empfangen einer Anforderung von Zugriff (304, 404) auf den Datendienst von der Fahrzeug-Unterhattungs-und-tnformationsverarbeitungs-Vorrichtung (100),
eine Feststelleinrichtung, die feststellt, ob die Fahrzeug-Unterhaltungs-und-Informationsverarbeitungs-Vorrichtung (100) auf den angeforderten Datendienst zugreifen darf, und
eine Sendeeinrichtung, die Zugriffsinformationen (316, 416), die sich auf den Datendienst beziehen, von dem Zugriffssteuerungs-Server (120) nur an die Fahrzeug-Unterhaltungs-und-Informationsverarbeitungs-Vorrichtung (100) sendet, wenn der Zugriffssteuerungs-Server (120) festgestellt hat, dass die Fahrzeug-Unterhaltungs-und-Informationsverarbeitungs-Vorrichtung (100) auf den angeforderten Datendienst zugreifen darf,
wobei die Zugriffsinformationen ein Zertifikat, das von der Fahrzeug-Unterhaltungs-und-Informationsverarbeitungs-Vorrichtung (100) verwendet wird, um verschlüsselte Dienstdaten mit dem Content-Server (130) auszutauschen, oder ein Sitzungsschlüssel sind, der von der Fahrzeug-Unterhaltungs-und-informationsverarbeitungs-Vorrichtung (100) verwendet wird, um die verschlüsselten Daten eines Audio- oder Video-Rundfunkdienstes zu entschlüsseln, der von dem Content-Server (200) bereitgestellt wird.

21. Vernetztes System, das einen Content-Server (130, 200), der einen Datendienst unter Verwendung von Daten in verschlüsselter Form bereitstellt, eine Fahrzeug-Unterhaltungs-und-Informationsverartieitungs-Vorrichtung (100) nach Anspruch 19 und einen Zugriffs-Steuerserver umfasst.

## Revendications

1. Procédé de contrôle d'accès pour contrôler un accès à des services de données dans un système en réseau comprenant un serveur de contenu (130, 200) qui fournit un service de données en utilisant des données sous forme chiffrée, un dispositif de traitement d'informations et de divertissement de véhicule (100), et un serveur de contrôle d'accès (120), le procédé comprenant les étapes suivantes :
le dispositif de traitement d'informations et de divertissement de véhicule (100) sollicite un accès (304, 404) au service de données au niveau du serveur de contrôle d'accès (120) ;
le serveur de contrôle d'accès (120) détermine (312, 412) si le dispositif de traitement d'informations et de divertissement de véhicule (100) est autorisé à accéder au service de données requis ; et
uniquement si le serveur de contrôle d'accès (120) a déterminé que le dispositif de traitement d'informations et de divertissement de véhicule (100) est autorisé à accéder au service de données, le serveur de contrôle d'accès (120) fournit des informations d'accès (315, 416) relatives au service de données au dispositif de traitement d'informations et de divertissement de véhicule (100),
dans lequel les informations d'accès sont un certificat utilisé par le dispositif de traitement d'informations et de divertissement de véhicule (100) pour échanger des données de service chiffrées avec le serveur de contenu (130), ou bien une clé de session utilisée par le dispositif de traitement d'informations et de divertissement de véhicule (100) pour déchiffrer les données chiffrées d'un service de diffusion audio ou vidéo fourni par le serveur de contenu (200).

2. Procédé de contrôle d'accès selon la revendication 1, comprenant par ailleurs l'étape consistant en ce que le dispositif de traitement d'informations et de divertissement de véhicule (100) reçoit le service de données chiffrées (403) du serveur de contenu (130, 200) en utilisant les informations d'accès reçues du serveur de contrôle d'accès (120).

3. Procédé de contrôle d'accès selon la revendication 1, comprenant par ailleurs l'étape consistant en ce que le dispositif de traitement d'informations et de divertissement de véhicule (100) établit (303) une connexion chiffrée avec le serveur de contenu (130, 200) en utilisant les informations d'accès reçues du serveur de contrôle d'accès (120) ; et
échange des données de connexion chiffrées (511) relatives au service de données, entre le dispositif de traitement d'informations et de divertissement de véhicule (100) et le serveur de contenu (130, 200).

4. Procédé de contrôle d'accès selon l'une des revendications 1 à 3, comprenant par ailleurs les étapes consistant en ce que le dispositif de traitement d'informations et de divertissement de véhicule (100) détermine si les informations d'accès sont enregistrées (502, 902) dans le dispositif de traitement d'informations et de divertissement de véhicule (100) ; et
si les informations d'accès sont enregistrées dans le dispositif de traitement d'informations et de divertissement de véhicule (100), le dispositif de traitement d'informations et de divertissement de véhicule (100) établit (303) une connexion chiffrée avec le serveur de contenu (130) ou déchiffre (403) des données chiffrées du service de données fournies par le serveur de contenu (200) en utilisant les informations d'accès enregistrées.

5. Procédé de contrôle d'accès selon l'une des revendications 1 à 4, comprenant par ailleurs les étapes consistant en ce que le serveur de contrôle d'accès (120) détermine si les informations d'accès sont enregistrées (504) au niveau du serveur de contrôle d'accès (120) ; et
si les informations d'accès ne sont pas enregistrées au niveau du serveur de contrôle d'accès (120), le serveur de contrôle d'accès (120) sollicite (314, 601) les informations d'accès auprès du serveur de contenu (130, 200) ou d'une autorité de certification (140).

6. Procédé de contrôle d'accès selon la revendication 5, comprenant par ailleurs l'étape consistant en ce que le serveur de contrôle d'accès (120) reçoit et enregistre (315, 603) les informations d'accès reçues du serveur de contenu (130, 200) ou de l'autorité de certification (140).

7. Procédé selon l'une des revendications 1 à 6, dans lequel l'étape consistant en ce que le serveur de contrôle d'accès (120) fournit des informations d'accès (316, 416) relatives au service de données au dispositif de traitement d'informations et de divertissement de véhicule (100) comprend l'étape consistant à :
transmettre un message (1003) depuis le serveur de contrôle d'accès (120) vers le dispositif de traitement d'informations et de divertissement de véhicule (100) qui indique une position au niveau du serveur de contrôle d'accès (120) à partir de laquelle les informations d'accès peuvent être obtenues par le dispositif de traitement d'informations et de divertissement de véhicule (100).

8. Procédé selon la revendication 7, dans lequel l'étape de fournir des informations d'accès (316, 416) au dispositif de traitement d'informations et de divertissement de véhicule (100) comprend par ailleurs les étapes consistant en ce que :
le dispositif de traitement d'informations et de divertissement de véhicule (100) sollicite (1006) les informations d'accès auprès du serveur de contrôle d'accès (120) au niveau de la position indiquée à réception du message ; et
le serveur de contrôle d'accès (120) transmet (1007) les informations d'accès au dispositif de traitement d'informations et de divertissement de véhicule (100).

9. Procédé selon l'une des revendications 1 à 6, comprenant par ailleurs l'étape consistant à mettre en route un minuteur après avoir sollicité un accès (304, 404) auprès du service de données au niveau du serveur de contrôle d'accès (120).

10. Procédé selon la revendication 9, dans lequel l'étape de fournir des informations d'accès (316, 418) relatives au service de données au dispositif de traitement d'informations et de divertissement de véhicule (100) comprend par ailleurs les étapes consistant en ce que :
le dispositif de traitement d'informations et de divertissement de véhicule (100) sollicite (1103) les informations d'accès auprès du serveur de contrôle d'accès (120) à expiration du minuteur ; et
le serveur de contrôle d'accès (120) fournit (1105) les informations de contrôle d'accès au dispositif de traitement d'informations et de divertissement de véhicule (100).

11. Procédé de contrôle d'accès selon l'une des revendications 1 à 10, dans lequel la demande d'accès du dispositif de traitement d'informations et de divertissement de véhicule (100) auprès du serveur de contrôle d'accès (120) indique le service de données auquel un accès est sollicité et/ou un identificateur du dispositif de traitement d'informations et de divertissement de véhicule (100).

12. Procédé selon l'une des revendications 1 à 11, comprenant par ailleurs l'étape consistant à fournir le service de données à un utilisateur du dispositif de traitement d'informations et de divertissement de véhicule (100) qui emploie une application de navigateur.

13. Procédé selon l'une des revendications 1 à 12, comprenant par ailleurs l'étape consistant en ce que le dispositif de traitement d'informations et de divertissement de véhicule (100) enregistre les informations d'accès (308, 408) dans des moyens de stockage (107) du dispositif de traitement d'informations et de divertissement de véhicule (100).

14. Procédé selon la revendication 13, comprenant par ailleurs l'étape consistant à redémarrer (309) l'application de navigateur après un enregistrement des informations relatives au serveur de contenu (130, 200) au niveau du dispositif de traitement d'informations et de divertissement de véhicule (100).

15. Procédé selon l'une des revendications 1 à 14, comprenant par ailleurs l'étape consistant en ce que :
le dispositif de traitement d'informations et de divertissement de véhicule (100) déclenche une nouvelle fois la requête pour le service de données.

16. Procédé selon l'une des revendications 1 à 15, dans lequel le serveur de contrôle d'accès (120) détermine si le dispositif de traitement d'informations et de divertissement de véhicule (100) est autorisé à accéder au service de données requis en se basant sur un identificateur qui identifie de façon unique le dispositif de traitement d'informations et de divertissement de véhicule (100).

17. Procédé selon l'une des revendications 1 à 16, comprenant par ailleurs l'étape consistant en ce que le serveur de contrôle d'accès (120) initie un processus d'abonnement de façon à permettre au dispositif de traitement d'informations et de divertissement de véhicule (100) de s'abonner au service de données requis, si le serveur de contrôle d'accès (120) détermine que le dispositif de traitement d'informations et de divertissement de véhicule (100) n'est pas autorisé à accéder au service de données requis.

18. Procédé selon l'une des revendications 1 à 17, dans lequel le dispositif de traitement d'informations et de divertissement de véhicule (100) accède au système en réseau par le biais d'une liaison radio.

19. Dispositif de traitement d'informations et de divertissement de véhicule (100) pour usage dans un réseau comprenant un serveur de contenu (130, 200) qui fournit un service de données en utilisant des données sous forme chiffrée, le dispositif de traitement d'informations et de divertissement de véhicule (100), et un serveur de contrôle d'accès (120), dans lequel le dispositif de traitement d'informations et de divertissement de véhicule (100) comprend :
un module radio (101) pour solliciter un accès (304, 404) au service de données au niveau du serveur de contrôle d'accès (120), et
dans lequel le module radio (101) est adapté pour recevoir des informations d'accès (316, 416) relatives au service de données au niveau du dispositif de traitement d'informations et de divertissement de véhicule (100) en provenance du serveur de contrôle d'accès (120), uniquement si le serveur de contrôle d'accès (120) a déterminé que le dispositif de traitement d'informations et de divertissement de véhicule (100) est autorisé à accéder au service de données requis,
dans lequel les informations d'accès (316, 416) sont un certificat et le dispositif de traitement d'informations et de divertissement de véhicule (100) comprend des moyens (103) pour échanger des données de service chiffrées avec le serveur de contenu (130) en utilisant le certificat, ou bien les informations d'accès (316, 416) sont une clé de session et le dispositif de traitement d'informations et de divertissement de véhicule (100) comprend des moyens (103) pour déchiffrer les données chiffrées d'un service de diffusion audio ou vidéo fourni par le serveur de contenu (200) en utilisant la clé de session.

20. Serveur de contrôle d'accès (120) pour usage dans un réseau comprenant un serveur de contenu (130, 200) qui fournit un service de données en utilisant des données sous forme chiffrée, un dispositif de traitement d'informations et de divertissement de véhicule (100), et le serveur de contrôle d'accès (120), qui sont reliés les uns aux autres par le biais d'un réseau, dans lequel le serveur de contrôle d'accès (120) comprend :
des moyens de réception pour recevoir une demande d'accès (304, 404) au service de données de la part d'un dispositif de traitement d'informations et de divertissement de véhicule (100) ;
des moyens de détermination pour déterminer si le dispositif de traitement d'informations et de divertissement de véhicule (100) est autorisé à accéder au service de données requis ; et
des moyens de transmission pour transmettre des informations d'accès (316, 416) relatives au service de données au niveau du dispositif de traitement d'informations et de divertissement de véhicule (100) en provenance du serveur de contrôle d'accès (120), uniquement si le serveur de contrôle d'accès (120) a déterminé que le dispositif de traitement d'informations et de divertissement de véhicule (100) est autorisé à accéder au service de données requis,
dans lequel les informations d'accès sont un certificat utilisé par le dispositif de traitement d'informations et de divertissement de véhicule (100) pour échanger des données de service chiffrées avec le serveur de contenu (130), ou bien une clé de session utilisée par le dispositif de traitement d'informations et de divertissement de véhicule (100) pour déchiffrer les données chiffrées d'un service de diffusion audio ou vidéo fourni par le serveur de contenu (200).

21. Système en réseau comprenant un serveur de contenu (130, 200) qui fournit un service de données en utilisant des données sous forme chiffrée, un dispositif de traitement d'informations et de divertissement de véhicule (100) selon la revendication 19, et un serveur de contrôle d'accès.
